(19) Europäisches Patentamt
European Patent Office
Office européen des brevets

(11) EP 4 254 038 A1

(12) EUROPEAN PATENT APPLICATION
published in accordance with Art. 153(4) EPC

(43) Date of publication:
04.10.2023 Bulletin 2023/40

(51) International Patent Classification (IPC):
G02B 21/36 (2006.01)

(21) Application number: 21891830.8

(52) Cooperative Patent Classification (CPC):
G02B 21/36

(22) Date of filing: 08.11.2021

(86) International application number:
PCT/JP2021/041029

(87) International publication number:
WO 2022/102584 (19.05.2022 Gazette 2022/20)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.11.2020 JP 2020190386

(71) Applicant: NIKON CORPORATION
Minato-ku
Tokyo 108-6290 (JP)

(72) Inventors:
• FUJIKAKE, Yosuke
  Tokyo 108-6290 (JP)
• NIITANI, Yamato
  Tokyo 108-6290 (JP)

(74) Representative: Hoffmann Eitle
Patent- und Rechtsanwälte PartmbB
Arabellastraße 30
81925 München (DE)

(54) MICROSCOPE

(57) A microscope includes: an illumination optical system that focuses illumination light and forms an illumination region on a sample; a detection optical system that forms an image by light from the sample on which the illumination region is formed on an image plane; an aberration setting unit that sets an aberration state of at least one of the illumination optical system and the detection optical system; a detector in which a detection surface having a plurality of aligned detection units is arranged on the image plane of the detection optical system; a calculation unit that calculates light amount distribution information of a detection image detected by the plurality of detection units; and a computation unit that determines an aberration state of at least one of the illumination optical system and the detection optical system which should be set by the aberration setting unit based on the light amount distribution information of the detection image in a plurality of aberration states set by the aberration setting unit.

FIG. 1

**Description**

TECHNICAL FIELD

The present invention relates to a microscope.

Priority is claimed on Japanese Patent Application No. 2020-190386, filed on November 16, 2020, the contents of which are incorporated herein by reference.

BACKGROUND

A scanning microscope (hereinafter, referred to as an Image Scanning Microscope which is abbreviated as "ISM") has been proposed in which illumination light is focused and irradiated onto a sample, and fluorescence generated from the sample is detected by a detector in which a plurality of detection pixels is arranged (Patent Document 1).

Further, an objective lens in use for a biological microscope has been proposed, the objective lens including an aberration correction lens and a correction ring that correct aberration variation in accordance with a thickness error of a specimen holding member having transparency or a cover glass (Patent Document 2).

[Related Art Documents]

[Patent Documents]

[Patent Document 1]
U.S. Patent No. 9632296

[Patent Document 2]
Japanese Patent No. 4933706

SUMMARY OF INVENTION

According to a first aspect, a microscope includes: an illumination optical system that focuses illumination light and forms an illumination region on a sample; a detection optical system that forms an image by light from the sample on which the illumination region is formed on an image plane; an aberration setting unit that sets an aberration state of at least one of the illumination optical system and the detection optical system; a detector in which a detection surface having a plurality of aligned detection units is arranged on the image plane of the detection optical system; a calculation unit that calculates light amount distribution information of a detection image detected by the plurality of detection units; and a computation unit that determines an aberration state of at least one of the illumination optical system and the detection optical system which should be set by the aberration setting unit based on the light amount distribution information of the detection image in a plurality of aberration states set by the aberration setting unit.

According to a second aspect, a program that is executed by a control part causes a data acquisition unit through the control part to acquire a plurality of detection images in states in which aberration states of a detection optical system or an illumination optical system are different from each other, each of the detection images being obtained by detecting an illumination region on a sample on which illumination light by the illumination optical system is focused using a plurality of detection units arranged on an image plane of the detection optical system, causes a calculation unit through the control part to calculate light amount distribution information of each of the plurality of detection images, and causes a computation unit through the control part to determine an aberration state which should be set in the illumination optical system or the detection optical system based on a plurality of the light amount distribution information.

BRIEF DESCRIPTION OF THE DRAWINGS

FIG. 1 is a view schematically showing a configuration of a microscope of a first embodiment.
FIG. 2A is a view showing a detection surface and an image formed on the detection surface.
FIG. 2B is a view showing a detection image detected by each detection pixel.
FIG. 3 is a view showing a flow for determining an aberration state.
FIG. 4A is a view showing an example of light amount distribution of a detection image detected by a detector.

FIG. 4B is a view showing an example of light amount distribution of the detection image detected by the detector.

FIG. 5 is a view showing an example of a relationship between light amount distribution information and an aberration state set by an aberration setting unit.

FIG. 6 is a view schematically showing a configuration of a microscope of a second embodiment.

FIG. 7 is a view showing an example of a flow for determining an aberration state in the microscope of the second embodiment.

FIG. 8 is a view showing a modification example of a light reception optical system and a control part.

FIG. 9 is a view showing an entire detector of the modification example.

(Microscope of first embodiment)

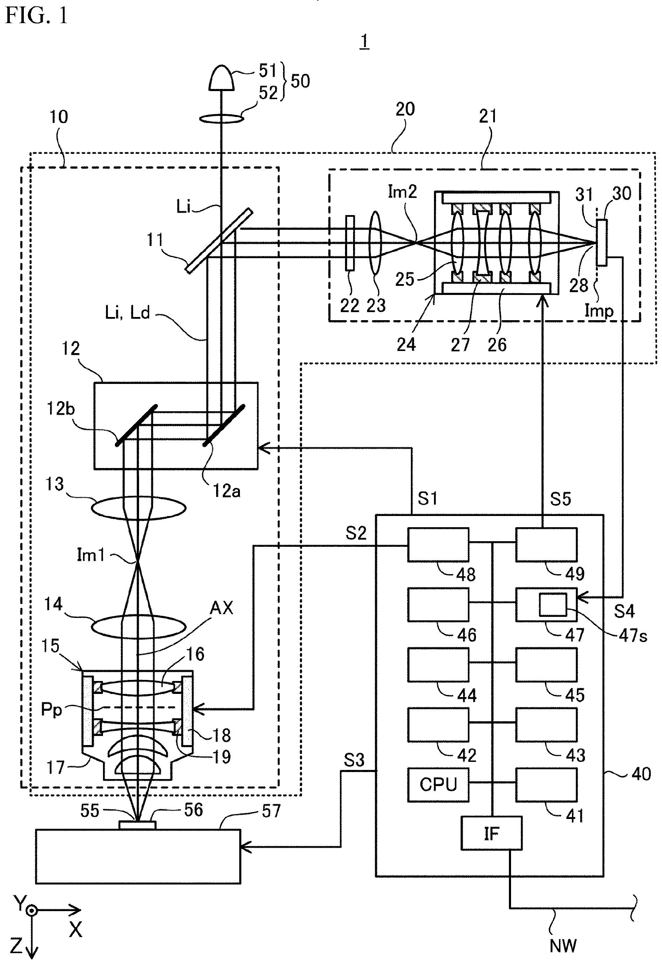

FIG. 1 is a view schematically showing a configuration of a microscope 1 of a first embodiment. The following embodiment is described using an example in which the microscope 1 is a scanning fluorescent microscope; however, the microscope according to the embodiment is not limited to the fluorescent microscope.

The X direction, the Y direction, and the Z direction indicated by an arrow in FIG. 1 and the drawings referred to below are orthogonal to each other, and each of the X direction, the Y direction, and the Z direction shows the same direction in the drawings. In the following, directions indicated by the arrows are referred to as the +X direction, the +Y direction, and the +Z direction, respectively. The +Z direction is a downward direction parallel to an optical axis AX of an objective lens 15. Further, the position in the X direction is referred to as a X position, the position in the Y direction is referred to as a Y position, and the position in the Z direction is referred to as a Z position.

The microscope 1 includes an illumination optical system 10 (a region surrounded by a dashed line in FIG. 1), a detection optical system 20 (a region surrounded by a dotted line in FIG. 1), a control part 40, a stage 57 on which a sample 56 is placed, and the like.

The illumination optical system 10 includes a bifurcation mirror 11, a deflection unit 12, a relay lens 13, a relay lens 14, and an objective lens 15 which are arranged along an optical path of illumination light Li. The illumination optical system 10 irradiates an illumination region 55 on the sample 56 with the illumination light Li from a light source unit 50.

The detection optical system 20 includes the objective lens 15, the relay lens 14, the relay lens 13, the deflection unit 12, the bifurcation mirror 11, and a light reception optical system 21 (a region surrounded by a two-dot chain line in FIG. 1) which are arranged along an optical path of detection light Ld. The detection optical system 20 forms an image 28 of the illumination region 55 on the sample 56 on an image plane Imp.

The bifurcation mirror 11, the deflection unit 12, the relay lens 13, the relay lens 14, and the objective lens 15 are shared by the illumination optical system 10 and the detection optical system 20.

The control part 40 includes a CPU, an interface unit IF, a storage unit 41, an optical drive 42, a display unit 43, an image data generation unit 44, a calculation unit 45, a computation unit 46, a data acquisition unit 47, an aberration control unit 48, and a magnification control unit 49. A network cable NW is connected to an interface unit IF, and the network cable NW is connected to an external server (not shown). The control part 40 controls a variety of operations of the microscope 1 described below by the CPU executing a program stored in the storage unit 41. However, in the following description, explanation of the CPU and the control part 40 which are execution subjects may be omitted.

The light source unit 50 includes a light source 51 such as a laser. The light emitted from the light source 51 is shaped and parallelized by a lens 52, is emitted from the light source unit 50 as the illumination light Li and is supplied to the illumination optical system 10. The light source 51 may be any of a laser that emits continuous oscillation light and a laser that emits pulsed light. Further, the light source 51 may not be a laser and may be an LED or a bright line lamp. Further, the light source unit 50 may include a plurality of light sources 51 that emit light having a wavelength different from each other and a synthetic optical system that synthesizes light emitted from the plurality of light sources into one illumination light Li.

The illumination light Li that enters the illumination optical system 10 transmits through the bifurcation mirror 11 having a dichroic mirror or the like and enters the deflection unit 12. As an example, an X-direction deflection mirror 12a and a Y-direction deflection mirror 12b are provided in the deflection unit 12. The illumination light Li reflected by the X-direction deflection mirror 12a and the Y-direction deflection mirror 12b is focused by the relay lens 13 and is focused on a first intermediate imaging point Im1.

The illumination light Li then enters the objective lens 15 via the relay lens 14 and is focused by the objective lens 15 onto the sample 56 held on the stage 57. Accordingly, the illumination region 55 is formed on the sample 56 by focusing the illumination light Li at about the resolution limit of the objective lens 15.

Here, the size of the illumination region 55 is the full width ($1/e^2$) of the light amount in a XY plane of the illumination region 55. Further, the resolution limit of the objective lens 15 corresponds to a radius of a first dark ring of a so-called Airy disk and is a numerical value obtained by $0.61 \times \lambda 1/NA$ when the wavelength of the illumination light Li is $\lambda 1$ and the numerical aperture of the objective lens 15 is NA.

When the size of the illumination region 55 is smaller than $1.22 \times \lambda 1/NA$ which is a diameter of the first dark ring of the Airy disk, the illumination light Li is referred to as being focused to the resolution limit.

The X-direction deflection mirror 12a and the Y-direction deflection mirror 12b are arranged at a position which is approximately a conjugate plane of a pupil plane Pp of the objective lens 15 via the objective lens 15 and the relay lenses 13, 14 with respect to the sample 56. Then, the X-direction deflection mirror 12a of the deflection unit 12 swings in a predetermined direction, and thereby, the illumination region 55 moves (oscillates) in the X direction on the sample 56. Further, the Y-direction deflection mirror 12b swings in a predetermined direction, and thereby, the illumination region 55 moves (oscillates) in the Y direction on the sample 56.

Accordingly, by the control part 40 controlling the deflection unit 12 by a control signal S1, that is, controlling swing positions of the X-direction deflection mirror 12a and the Y-direction deflection mirror 12b, the illumination region 55 can be scanned in two dimensions in the XY direction on the sample 56. The X-direction deflection mirror 12a and the Y-direction deflection mirror 12b can include a galvanometer mirror, a MEMS mirror, a resonant mirror (resonance mirror), or the like.

A configuration may be employed in which the control part 40 controls the stage 57 that holds the sample 56 to move in the X direction and the Y direction by a control signals S3, and thereby, the illumination region 55 and the sample 56 on the stage 57 are relatively scanned. Further, a configuration may be employed in which both of scanning by the deflection unit 12 and scanning by the stage 57 are performed.

At least one of the deflection unit 12 and the stage 57 can be referred to as a scanning portion that relatively scans the illumination region 55 and the sample 56 on the stage 57 while maintaining a conjugate relationship between the illumination region 55 and the image plane Imp. The control part 40 controls a relative position relationship between the illumination region 55 and the sample 56 by controlling the deflection unit 12 or the stage 57 which is the scanning portion.

The sample 56 which is an observation target of the microscope 1 of the first embodiment is often a biological sample, and therefore, an upper surface (a surface on the +Z side) of the sample 56 is often covered by a cover glass. The aberration correction is performed for the illumination optical system 10 and the detection optical system 20 including the objective lens 15 and the like in a condition that a cover glass having a standard thickness is used. However, when the thickness of the cover glass has an error relative to the standard value, aberration caused by the thickness error of the cover glass occurs in the detection optical system 20 and the illumination optical system 10. Further, when the distance in the Z direction from the cover glass to an observation target part in the sample 56 is changed from an expected distance, an aberration may occur due to the change in the optical path length in the sample 56.

As shown in FIG. 1, the objective lens 15 includes a correction ring 18 that corrects aberrations which occur due to the thickness error of the cover glass. As an example of a configuration of the objective lens 15, at least part of four lenses 16 are held by the correction ring 18 via a holding frame 19. Since the correction ring 18 is similar to an electric correction ring commonly included in an objective lens for high-performance biological microscopes, a description of the details of such a configuration is omitted.

In accordance with movement such as a rotation of the correction ring 18 relative to an objective lens housing 17, Z positions of the lenses 16 held by the correction ring 18 through the holding frame 19 are changed, and a state of aberration correction of the objective lens 15, i.e., the aberration state is changed. Thereby, aberrations which occur due to the thickness error of the cover glass or the like can be corrected.

The aberration control unit 48 included in the control part 40 transmits a control signal S2 to the correction ring 18 and sets the aberration state of the objective lens 15 to a predetermined state described later.

Either or both of the correction ring 18 and the aberration control unit 48 can be referred to as an aberration setting unit that sets the aberration state of the illumination optical system 10 and the detection optical system 20 including the objective lens 15.

The correction ring 18 is not limited to the electric correction ring described above and may be a correction ring manually set by an operator. In that case, the operator sets the position of the correction ring 18 in accordance with a designated position determined by the aberration control unit 48 and displayed in the display unit 43.

As the sample 56, for example, a cell fluorescently stained in advance or the like is used but is not necessarily limited to a substance that emits fluorescence. Further, when the substance that emits fluorescence is used as the sample 56, it is preferable to select a wavelength that excites a fluorescent substance included in the sample 56 as the wavelength of the light source 51. When the substance that emits fluorescence is used as the sample 56, a wavelength that performs multiphoton excitation of a fluorescent substance included in the sample 56 may be selected as the wavelength of the light source 51.

The light source unit 50 may be provided on the microscope 1 to be replaceable (attachable, detachable) or may be externally attached to the microscope 1 at the time of observation by the microscope 1 or the like.

The light (detection light) Ld emitted from the sample 56 by irradiation of the illumination light Li to the illumination region 55 enters the objective lens 15, is refracted by the objective lens 15, and arrives at the deflection unit 12 through the relay lenses 14, 13. Then, the light is reflected by each of the Y-direction deflection mirror 12b and the X-direction deflection mirror 12a of the deflection unit 12. The detection light Ld becomes light parallel to the optical axis by the reflections at the Y-direction deflection mirror 12b and the X-direction deflection mirror 12a, returns (de-scanned) to almost the same optical path as the illumination light Li before entering the deflection unit 12, and arrives at the bifurcation mirror 11.

Then, the detection light Ld is reflected by the bifurcation mirror 11 and enters the light reception optical system 21.

In the embodiment described above, the bifurcation mirror 11 branches the light by causing the illumination light Li to transmit therethrough and reflecting the detection light Ld, but the bifurcation mirror 11 may be a mirror that branches the light by reflecting the illumination light Li and causing the detection light Ld to transmit therethrough.

The light reception optical system 21 includes a barrier filter 22 such as a bandpass filter, a focusing lens 23, and a variable magnification optical system 24. The barrier filter 22 blocks illumination light Li that is mixed in the detection light Ld and that enters the light reception optical system 21 and selects the wavelength range of the detection light Ld to a particular wavelength range. At least one of the barrier filter 22 arranged in the detection optical system 20 and the bifurcation mirror 11 having a dichroic mirror can be referred to as a wavelength selection member that prevents the illumination light Li from arriving at a detector 30 and causes light having a different wavelength from the illumination light Li to arrive at the detector 30 among the light from the sample 56.

The detection light Ld that passes through the barrier filter 22 is focused by the focusing lens 23 and is focused on a second intermediate imaging point Im2. The detection light Ld then enters the variable magnification optical system 24 and forms the image 28 by light (detection light Ld) from the sample 56 in which the illumination region 55 is formed on a detection surface 31 of the detector 30 arranged at the image plane Imp. The detection surface 31 of the detector 30 is arranged to coincide with the image plane Imp of the detection optical system 20.

The variable magnification optical system 24 is an electric zoom lens system that forms an image at the second intermediate imaging point Im2 on the detection surface 31 of the detector 30. The variable magnification optical system 24 includes, as an example, four lenses 25, and at least part of the plurality of lenses 25 are held via a holding frame 27 by a zoom barrel 26 in which a cam groove or the like is formed.

By the zoom barrel 26 rotating relative to a housing of the variable magnification optical system 24 by a motor (not shown), the X positions of the plurality of lenses 25 are changed, a focal distance and a position of a principal point of the variable magnification optical system 24 are changed, and magnification from the intermediate imaging point Im2 to the detection surface 31 is changed.

Thereby, an imaging magnification Mag from the sample 56 (object plane) of the detection optical system 20 to the detection surface 31 (image plane Imp) is also changed, and the size of the image 28 in the detection surface 31 is changed.

The magnification control unit 49 included in the control part 40 transmits a control signal S5 to the variable magnification optical system 24 and sets the magnification of the variable magnification optical system 24 to a predetermined state described later.

The configuration of the variable magnification optical system 24 is not limited to the configuration described above and may be a configuration that is employed in a variety of known zoom lenses and that moves the lenses 25 using a stepping motor and a feed screw or the like.

Further, the number of lenses 25 included in the variable magnification optical system 24 is not limited to four as described above and may be another arbitrary number.

Similarly, the number of lenses 16 included in the objective lens 15 described above is also not limited to four as described above and may be another arbitrary number. The relay lenses 13, 14 and the focusing lens 23 are not also limited to the single lens shown in the drawing and may include a plurality of lenses or may include a plurality of mirrors.

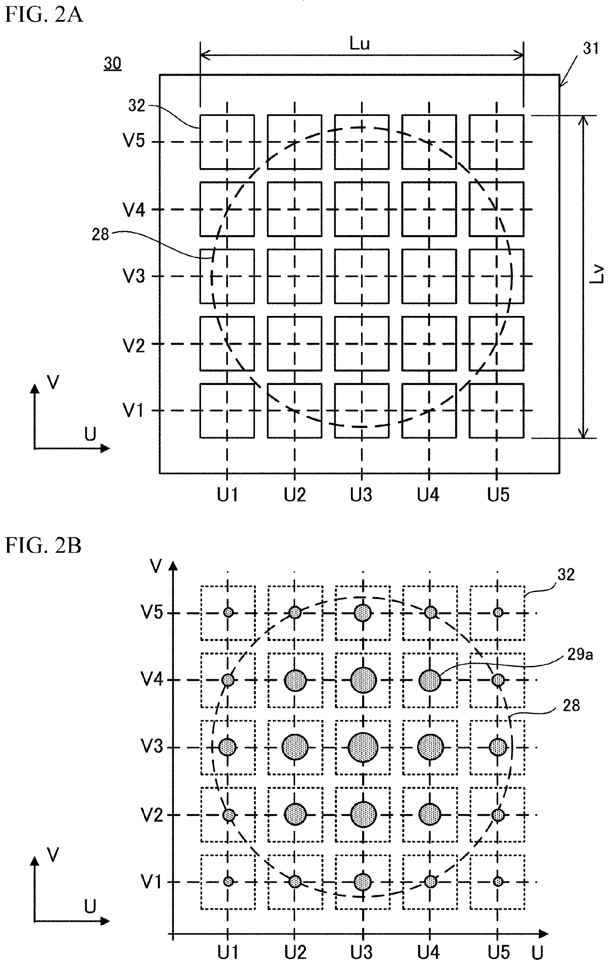

FIG. 2A is a view showing the detection surface 31 and the image 28 formed on the detection surface 31. In FIG. 1, the detection surface 31 is arranged in parallel with the YZ plane, but the orientation of the detection surface 31 is arbitrarily changed depending on the arrangement of the reflection surface (the X-direction deflection mirror 12a, the Y-direction deflection mirror 12b, the bifurcation mirror 11, and the like) within the detection optical system 20.

Accordingly, the detection surface 31 is described with reference to a U direction and a V direction shown by an arrow in FIG. 2A. The U direction and the V direction are directions in which the X direction and the Y direction on the sample 56 shown in FIG. 1 are respectively projected to the detection surface 31 through the optical path of the detection light Ld by the detection optical system 20. The U direction and the V direction shown in the following drawings also show the same directions of FIG. 2A.

As an example, five detection pixels 32 in the U direction and five detection pixels 32 in the V direction, that is, total $5 \times 5 = 25$ detection pixels 32 are arranged on the detection surface 31. A central position (U, V) of each of the detection pixels 32 corresponds, as an example, to each of positions from (U1, V1) to (U5, V5) that are aligned at equally spaced intervals in the U direction and the Y direction shown in FIG. 2A.

The length from a -U direction end to a +U direction end of the entire detection pixels 32 is referred to as a length Lu, and the length from a -V direction end to a +V direction end is referred to as a length Lv.

As shown in FIG. 2A, the image 28 is formed such that the center substantially corresponds to the central position of the array of the plurality of detection pixels 32. The size of the image 28 in the detection surface 31 can be changed by changing the magnification of the variable magnification optical system 24.

For example, an avalanche photodiode array having high sensitivity and high responsivity can be used as the detector 30.

The widths in the U direction and the V direction of one detection pixel 32 are, for example, about $0.25 \times \lambda 2/NA$ when being converted to the length on the sample 56 when the wavelength of the detection light is $\lambda 2$ and the numerical aperture of the objective lens 15 is NA.

The number of the detection pixels 32 arranged in the detection surface 31 is not limited to the number described above, and may be another arbitrary number of two or more. Further, the detection pixels 32 do not need to be arranged in parallel with the U direction and the V direction and may be arranged along a direction rotated from the U direction and the V direction within the detection surface 31.

Further, the detection pixels 32 may not be arranged at equally spaced intervals in the U direction and the Y direction and may be arranged at unequally spaced intervals. Further, the detection pixels 32 may not be densely arranged within the detection surface 31 and may be discretely arranged. Further, the detection pixels 32 may not be arranged in two dimensions and may be arranged in one dimension.

The light amount of the image 28 is detected by each of the plurality of detection pixels 32. That is, the light amount of a portion of the image 28 corresponding to each of the plurality of detection pixels 32 is detected by each of the detection pixels 32 and is photoelectrically converted. Hereinafter, digital data obtained by A/D conversion of an electrical signal corresponding to the light amount of the image 28 detected by the plurality of detection pixels 32 is referred to as a detection image 29a. Further, since the data included in the detection image 29a is data relating to distribution (light amount distribution) of the light amount of the image 28, hereinafter, a numerical value represented by the data included in the detection image 29a is also referred to as a light amount.

FIG. 2B is a view showing an example of the detection image 29a detected by the plurality of detection pixels 32 of the detector 30. The detection image 29a is numerical data distributed discretely corresponding to a plurality of positions (U, V) = (U1, V1) to (U5, V5) which are a central position of each of the detection pixels 32 that detect the light amount of the image 28. In FIG. 2B, the area of a circle representing each of the detection images 29a represents a magnitude corresponding to the light amount of the detection image 29a at each position.

The detector 30 outputs the detection image 29a as a light amount signal S4, and the data acquisition unit 47 of the control part 40 acquires the detection image 29a transmitted from the detector 30.

The image data generation unit 44 of the control part 40 causes the data acquisition unit 47 to read the detection image 29a in synchronization with the relative scan between the illumination region 55 and the sample 56. Then, the image data generation unit 44 generates intermediate image data which is a relation of the light amount of the detection image 29a with the relative position relationship between the illumination region 55 and the sample 56 for each detection pixel 32 that outputs the detection image 29a.

The image data generation unit 44 performs positional shift and addition of a plurality of intermediate image data generated for each detection pixel 32 in accordance with the position within the detection surface 31 (image plane Imp) of the corresponding detection pixel 32 and generates image data of the sample 56. The process of the positional shift and the addition is described in detail, for example, in a document "Superresolution by image scanning microscopic using pixel reassignment", Optics Letter (USA), Volume 38, No. 15, 2889, 2013, authored by C. J. Sheppard, S. B. Mehta, and R. Heintzmann, and therefore, description is omitted here.

(Flow determining aberration state to be set)

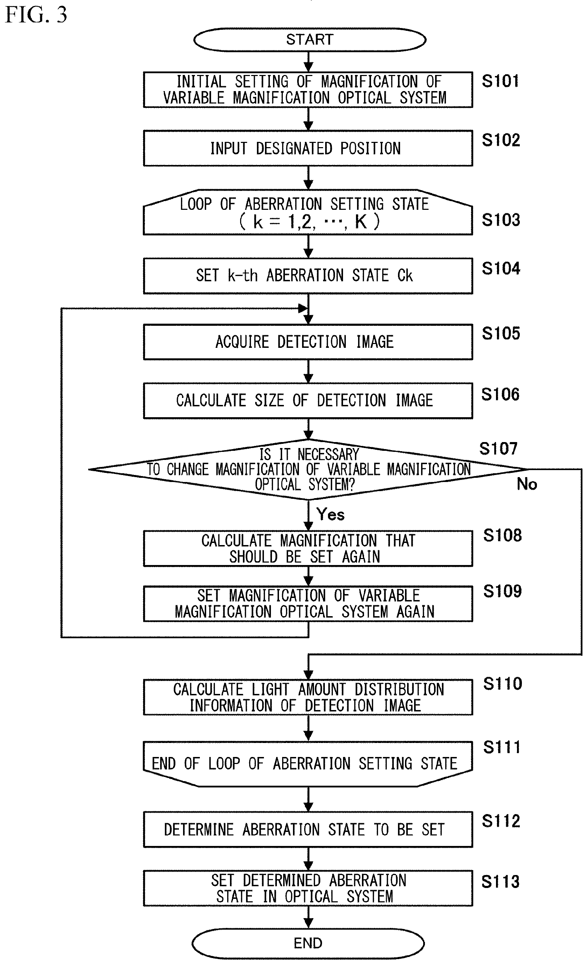

FIG. 3 is a view showing a flow for determining an aberration state of the illumination optical system 10 and the detection optical system 20 including the objective lens 15.

The microscope 1 of the first embodiment sets an aberration state of the illumination optical system 10 and the detection optical system 20 including the objective lens 15 on the basis of the light amount distribution information relating to the shape of the light amount distribution of the detection image 29a calculated from the detection image 29a before generating the XY two-dimensional image data of the sample 56. The setting of the aberration state is performed by setting the position of the correction ring 18 of the objective lens 15. The details of the light amount distribution information will be described later.

First, in Step S101, the magnification control unit 49 of the control part 40 transmits a control signal S5 to the variable magnification optical system 24 and sets the magnification of the variable magnification optical system 24 to an initial value. The initial value of the magnification of the variable magnification optical system 24 may be set in accordance with the magnification of the objective lens and the width of the detection pixel 32.

Subsequently, in Step S102, the control part 40 prompts an operator to input a designated position of a portion of the sample 56 which is irradiated with the illumination light Li when performing a process of determining the aberration state, that is, the relative position relationship between the sample 56 and the illumination region 55. The control part 40 receives an input of the designated position from the operator, transmits the control signal S1 to the deflection unit 12, or transmits the control signal S3 to the stage 57, and sets such that the relative position relationship between the sample 56 and the illumination region 55 becomes a designated position relationship.

In a loop from Step S 103 to Step S111, the control part 40 sets aberration states of K types (where K is an integer of three or more) that differ from one another to the objective lens 15, and the data acquisition unit 47 of the control part 40 acquires the detection image 29a in each of the states.

That is, in Step S104, the aberration control unit 48 of the control part 40 transmits the control signal S2 to the objective lens 15 and sets a k-th aberration state in the objective lens 15. In Step S105, the data acquisition unit 47 of the control part 40 acquires the detection image 29a in each of the aberration states.

When the correction ring 18 of the objective lens 15 is not an electric correction ring, in Step S104, the aberration control unit 48 causes the display unit 43 of the control part 40 to display a position where the correction ring 18 should be set, and the operator sets the position of the correction ring 18 in accordance with the display value.

The detection image 29a by the light from the sample 56 includes a light and dark distribution associated with the structure of the sample 56 itself and is therefore not necessarily an image suitable for determining the aberration state of the objective lens 15 or the like.

Accordingly, when setting the aberration state, the control part 40 acquires the detection image 29a while moving the relative position relationship between the illumination region 55 and the sample 56 in a predetermined range in an arbitrary direction within the XY plane by controlling the deflection unit 12 or the stage 57 which is the scanning portion.

The range of the movement of the relative position relationship between the illumination region 55 and the sample 56 may be a range that can average and resolve the light and dark distribution within the detection surface 31 associated with the structure of the sample 56. Accordingly, when the wavelength of the detection light Ld is $\lambda2$ and the numerical aperture of the objective lens 15 is NA, as an example, the movement may be performed in a range of about $10 \times \lambda2/NA$ or more.

The detection pixel 32 of the detector 30 may detect a portion of the light amount of the image 28 a plurality of times when the illumination region 55 moves on the sample 56 and output a plurality of obtained detection images 29a to the data acquisition unit 47 of the control part 40. In this case, the plurality of output detection images 29a are accumulated into one detection image 29a by an accumulation portion 47s provided in the data acquisition unit 47.

Alternatively, the detection pixel 32 of the detector 30 may accumulate and detect the light amount of the image 28 when the illumination region 55 moves relatively and continuously on the sample 56 and output the result as a detection image 29a to the data acquisition unit 47 of the control part 40. In this case, since the detection pixel 32 itself of the detector 30 serves as an accumulation portion that accumulates the image 28 by the light from the sample 56 and detects the accumulated image as a detection image, the accumulation portion 47s of the data acquisition unit 47 is not required. Further, a detector having a slow readout speed, that is, a low-cost detector can be used as the detector 30.

The shape of the light amount distribution obtained by accumulating the light amount distribution of the image 28 formed on the detection surface 31 in accordance with the movement on the sample 56 of the illumination region 55 coincides with a cross-correlation between a point image intensity distribution (PSF) of the detection optical system 20 and a point image intensity distribution (PSF) of the illumination optical system 10. Here, the point image intensity distribution of the illumination optical system 10 is a point image intensity distribution within the XY plane which the illumination optical system 10 forms in the sample 56. The point image intensity distribution of the detection optical system 20 is obtained by converting a point image intensity distribution which the detection optical system 20 forms in the detection surface 31 using light from one point in the sample 56 to a distribution in the sample 56 in consideration of the magnification of the detection optical system 20.

Accordingly, the light amount distribution of the image 28 accumulated in accordance with the movement on the sample 56 of the illumination region 55 can also be referred to as a PSF cross-correlation image of the microscope 1.

When the concentration of the fluorescent substance in the sample 56 is uniform, since the light and dark distribution associated with the structure of the sample 56 itself does not occur, the relative scan between the illumination region 55 and the sample 56 when acquiring the detection image 29a is not required.

The calculation unit 45 of the control part 40 receives the detection image 29a from the data acquisition unit 47. The calculation unit 45 performs an interpolation process in which the detection image 29a is interpolated with respect to at least one of the U direction and the V direction using a known method. By the interpolation process, an interpolation detection image 29b which is pseudo-continuous data, for example, having a resolution of 20 or more in the U direction and the V direction is generated from the detection image 29a which is, for example, $5 \times 5$ discrete data.

In the following description, a variety of processes performed by the calculation unit 45 are performed on the interpolation detection image 29b. However, the calculation unit 45 may not generate the interpolation detection image 29b. In this case, the variety of processes performed by the calculation unit 45 may be performed on the detection image 29a or may be performed on data obtained by suitably partially interpolating discrete data of the detection image 29a.

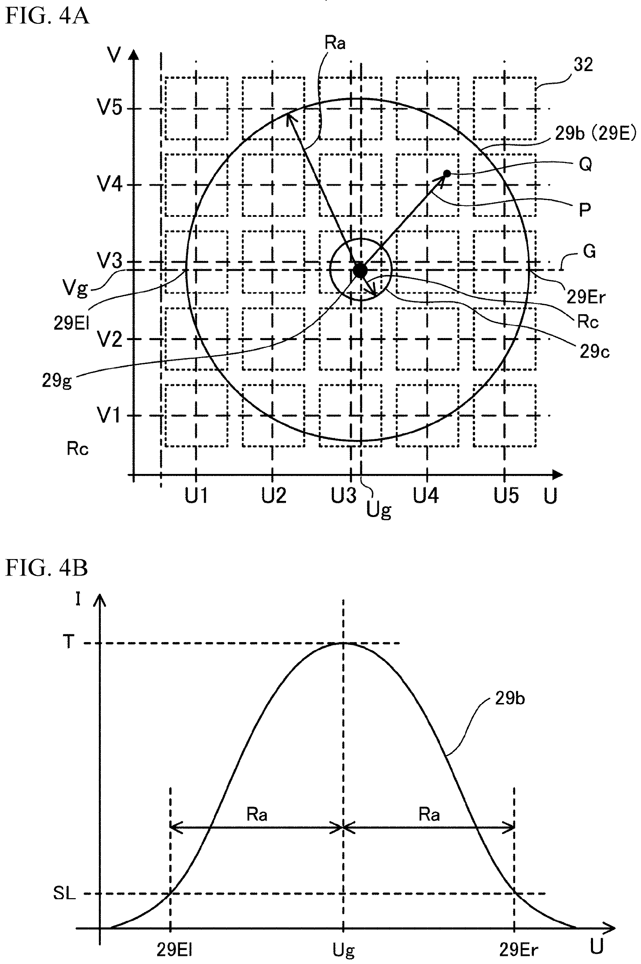

FIG. 4A is a view showing an imaginary relationship between the interpolated interpolation detection image 29b and the detection surface 31. In FIG. 4A, as an example, an interpolation detection image 29b which is a two-dimensional data string is displayed to be superimposed on a plurality of detection pixels 32 of the detection surface 31.

FIG. 4B is a view showing a distribution (light amount distribution) of a light amount I on a line segment G that passes through a light amount gravity center 29g and is parallel to the U direction of the interpolation detection image 29b shown in FIG. 4A. The position in the (U, V) coordinate of the light amount gravity center 29g is (Ug, Vg). The light amount distribution in the U direction of the interpolation detection image 29b becomes a distribution which is similar to the Gaussian distribution and in which the light amount is large at a center portion and the light amount is gradually reduced toward the circumference. In the case where the spherical aberration is dominant, since the light amount distribution of the image 28 has a light amount distribution that is generally rotationally symmetric, the light amount distributions of the detection image 29a and the interpolation detection image 29b also become a light amount distribution that is generally rotationally symmetric about the light amount gravity center 29g.

Hereinafter, the position where the light amount of the interpolation detection image 29b coincides with a slice level SL which is a light amount of a predetermined times of a light amount T which is the maximum value is referred to as an outer edge 29E of the interpolation detection image 29b. Two points at which the outer edge 29E intersects the line segment G are points 29El, 29Er, respectively.

Since the interpolation detection image 29b is a distribution that is generally rotationally symmetric about the light amount gravity center 29g when the spherical aberration is dominant, the outer edge 29E corresponds to a circumferential portion of a circle centered on the light amount gravity center 29g.

The light amount of the slice level SL is about 5% (0.05 times) to 25% (0.25 times) of the light amount T which is the maximum value of the light amount distribution and may be, as an example, $(1/e^2)$ times, that is, 13.5% of the light amount T. The light amount of the interpolation detection image 29b is also distributed outside the outer edge 29E. The position of each point Q within the interpolation detection image 29b with reference to the light amount gravity center 29g in the detection surface 31 is represented as a position vector P.

Hereinafter, the average value of a distance from the light amount gravity center 29g to each portion of the outer edge 29E is referred to as a radius Ra of the interpolation detection image 29b. A small circle 29c of a radius Rc centered on the light amount gravity center 29g will be described later.

As an interpolation process of interpolating the detection image 29a into the interpolation detection image 29b, for example, the detection image 29a which is discrete data may be fitted with a Gauss function represented by the following Expression (1), and interpolation may be performed based on the fitted Gauss function.

$$I = b \times \exp[-\{(U\text{-}Uc)^2 + (V\text{-}Vc)^2\}/2a^2] \dots (1)$$

That is, first, the parameters a, b, Uc, and Vc of Expression (1) are optimized by a least-square method or the like such that the difference between the light amount I represented by Expression (1) and the light amount of each of the detection images 29a is minimized. Then, the light amount I at an arbitrary data position (U, V) calculated from Expression (1) using the optimized parameters may be a value of the light amount of the interpolation detection image 29b.

At this time, the optimized parameter a corresponds to the standard deviation of the light amount distribution of the interpolation detection image 29b. Further, the position (Uc, Vc) represented by the optimized parameters Uc, Vc may be a position of the light amount gravity center 29g of the interpolation detection image 29b.

The interpolation process of interpolating the detection image 29a into the interpolation detection image 29b is not limited to the fitting using the Gauss function described above. For example, the interpolation process may be performed by fitting to another function such as the Lorentz function or may be performed by an interpolation process using bicubic interpolation or an interpolation process using spline interpolation.

In Step S106, the calculation unit 45 of the control part 40 calculates the size of the interpolation detection image 29b, that is, the size of the image 28 on the plane of the detection surface 31. The calculation unit 45 may set, as an example, twice ($2 \times Ra$) of the radius Ra described above which corresponds to the diameter of the interpolation detection image 29b as the size of the interpolation detection image 29b. As another example, the calculation unit 45 may set the standard deviation of the light amount distribution of the interpolation detection image 29b such as the parameter a of the Gauss function described above as the size of the interpolation detection image 29b. The size of the interpolation detection image 29b corresponds to the size of the detection image 29a and corresponds to the size of the image 28.

In order to precisely obtain the light amount distribution information relating to the shape of the light amount distribution of the detection image 29a and the interpolation detection image 29b, it is preferable that the image 28 be formed in a predetermined size in the range where the plurality of detection pixels 32 of the detection surface 31 are aligned. When the size of the image 28, that is, the size of the interpolation detection image 29b is larger or smaller than a predetermined size, it is necessary for the control part 40 to change the magnification of the variable magnification optical system 24 and change the size of the image 28, that is, the size of the interpolation detection image 29b.

In Step S107, the calculation unit 45 determines whether or not it is necessary to change the magnification of the variable magnification optical system 24.

In Step S107, the calculation unit 45 determines that it is necessary to change (enlarge) of the magnification, as an example, when the above-described diameter (2×Ra) of the interpolation detection image 29b is smaller than about 0.6 times to 0.7 times of the width of the region in which the detection pixel 32 on the detection surface 31 is arranged.

Further, in Step S107, the calculation unit 45 determines that it is necessary to change (decrease) the magnification, as an example, when the diameter (2×Ra) of the interpolation detection image 29b is larger than about 0.9 times to 1 time of the width of the region in which the detection pixel 32 on the detection surface 31 is arranged.

Here, the width of the region in which the detection pixel 32 on the detection surface 31 is arranged is a length of a longer one of the length Lu from the -U direction end to the +U direction end and the length Lv from the -V direction end to the +V direction end of the plurality of detection pixels 32 shown in FIG. 2A.

When the calculation unit 45 determines that it is necessary to change the magnification in Step S107, the routine proceeds to the Step S108, and the calculation unit 45 calculates a magnification that should be set again in the variable magnification optical system 24. The magnification that should be set again is a magnification that sets the diameter (twice the radius Ra) of the interpolation detection image 29b to a predetermined magnification in the range between about 0.6 times to 0.7 times as a lower limit and about 0.9 times to 1 time as an upper limit of the width of the region in which the detection pixel 32 is arranged.

Then, in Step S108, the magnification control unit 49 of the control part 40 transmits the control signal S5 to the variable magnification optical system 24 and sets the magnification of the variable magnification optical system 24 to the magnification that should be set again described above. Thereby, the above-described imaging magnification Mag from the sample 56 (object plane) of the detection optical system 20 to the detection surface 31 (image plane Imp) is also changed.

Then, the routine returns to Step S105 and acquires the detection image 29a again.

The above-described range of the diameter (twice the radius Ra) of the interpolation detection image 29b relative to the width of the region in which the detection pixel 32 is arranged is an example and may be another value.

When the calculation unit 45 determines that it is not necessary to change the magnification in Step S107, the routine proceeds to Step S110, and the calculation unit 45 calculates the light amount distribution information which is information on a width of the broadening of the light amount distribution of the interpolation detection image 29b or the like.

Since the interpolation detection image 29b is obtained by interpolating the detection image 29a, the light amount distribution information of the interpolation detection image 29b is also the light amount distribution information of the detection image 29a.

The light amount distribution information is, for example, a slice width at a predetermined slice level of the interpolation detection image 29b. The full width at half maximum which is a slice width of the interpolation detection image 29b at a slice level of 50% (half value) of the light amount T which is the maximum value of the light amount distribution may be the light amount distribution information.

The light amount distribution information may be the standard deviation of the interpolation detection image 29b.

However, both the slice width and the standard deviation are values that vary depending on the imaging magnification Mag of the detection optical system 20 described above. Accordingly, when being used as the light amount distribution information, a value obtained by dividing these values by the imaging magnification Mag of the detection optical system 20, that is, a value converted to a size on the sample 56 may be used.

The light amount distribution information may be an n-th moment (n is an integer of 2 or more) of the light amount distribution centered on the light amount gravity center 29g of the interpolation detection image 29b.

The n-th moment of the light amount distribution is an amount representing, as the $m_n$ by the following Expression (2) with respect to I(P), the light amount distribution of the interpolation detection image 29b representing, as P, the position vector with reference to the light amount gravity center 29g of each point Q within the interpolation detection image 29b.

[Formula 1]

$$m_n = \sum \{ (|P|/Mag)^n \, I(P)\}$$

$$\ldots (2)$$

In other words, the n-th moment of the light amount distribution is obtained by accumulating the multiplication of the light amount I(P) of each point Q within the interpolation detection image 29b by the n-th power of the distance (the absolute value of the position vector P) from the light amount gravity center 29g to each point Q. When n is an integer of 2 or more, the n-th moment becomes an amount corresponding to the width of the light amount distribution.

The range of the points Q on which the accumulation is performed for calculating the n-th moment may be limited to the inside of the outer edge 29E of the interpolation detection image 29b described above. Alternatively, the accumulation may be performed on a point Q that is present at the outside of the outer edge 29E.

In Expression (2), by dividing |P| (the absolute value of P) which is the length of the position vector P by the imaging magnification Mag of the detection optical system 20, the n-th moment of the light amount distribution converted to the scale on the sample 56 is obtained. However, |P| may not be divided by the imaging magnification Mag, and the n-th moment of the light amount distribution may be obtained at the scale of the detection surface 31.

Since the n-th moment $m_n$ of the light amount distribution is an amount proportional to an integration value (total value) of the light amount distribution from Expression (2), it is necessary to accurately set the exposure amount when detecting the detection image 29a.

An n-th normalization moment Mn obtained by dividing the n-th moment $m_n$ by the integration value of the light amount distribution of the interpolation detection image 29b represented by Expression (3) may be used as the light amount distribution information. In this case, even when the exposure amount when detecting the detection image 29a varies, an error does not occur in the normalization moment as the light amount distribution information.

[Formula 2]

$$M_n = \frac{\sum \{ (|P|/Mag)^n \, I(P) \}}{\sum I(P)}$$

$$\ldots (3)$$

The light amount distribution information may be an amount that corresponds to a peak light amount of the interpolation detection image 29b. For example, the light amount distribution information may be a center light amount hp obtained by accumulating the light amount within the point Q within the small circle 29c of a radius Rc that is smaller than the radius Ra centered on the light amount gravity center 29g shown in FIG. 4A obtained by Expression (4).

[Formula 3]

$$h_p = \sum_{|P|<Rc} I(P)$$

$$\ldots (4)$$

Here, P is a position vector with reference to the light amount gravity center 29g of each point Q as described above.

Further, the light amount distribution information may be a normalization center light amount Hp obtained by dividing the center light amount hp of Expression (4) by the total light amount of the interpolation detection image 29b obtained by Expression (5).

[Formula 4]

$$H_p = \frac{\sum_{|P|<Rc} I(P)}{\sum I(P)}$$

$$\ldots (5)$$

In the loop from Step S103 to Step S111, when the calculation of the light amount distribution information in the aberration state of K types is completed, the routine proceeds to Step S112.

In Step S112, the control part 40 calculates the aberration state that should be set in the illumination optical system 10 and the detection optical system 20 in the observation of the sample 56.

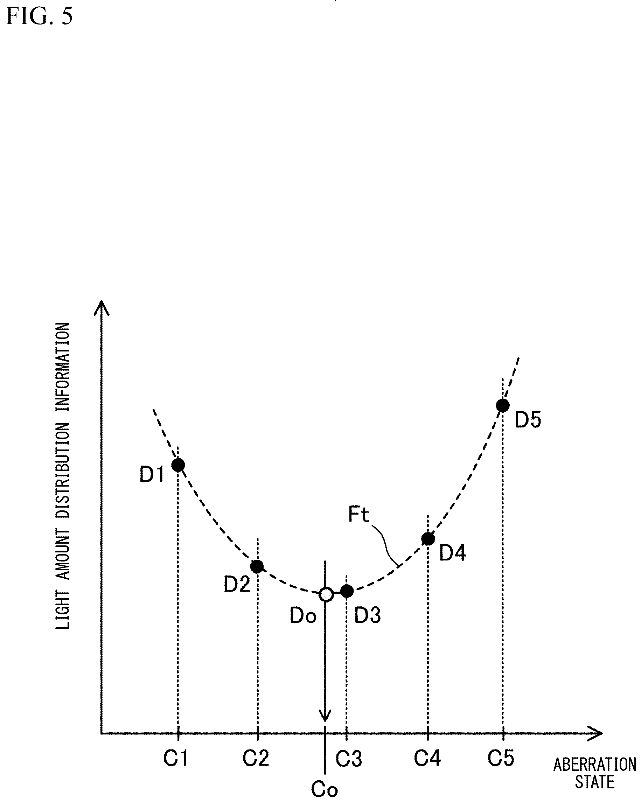

FIG. 5 is a view showing an example of a relationship Ft between aberration states (horizontal axis) each being set in the illumination optical system 10 and the detection optical system 20 in the loop from Step S103 to Step 5111 and the light amount distribution information (vertical axis) calculated from the detection image a and the interpolation detection image 29b. The aberration state of the horizontal axis may be a set position of the correction ring 18 or may be an amount of a variety of wavefront aberrations such as spherical aberration that occur in the objective lens 15 depending on the set position of the correction ring 18.

In the example shown in FIG. 5, as a loop of K times from Step S103 to Step S111, as an example, a result when a loop of five times is performed is shown. That is, the aberration control unit 48 of the control part 40 sets aberration states of five types from C1 to C5, and in each of the aberration states, the data acquisition unit 47 acquires the detection image 29a, and the calculation unit 45 calculates the light amount distribution information (D1 to D5) of detection images 29a of five types.

The computation unit 46 of the control part 40 determines an aberration state Co (optimum value) that provides a local minimal value Do (or a local maximal value) of the light amount distribution information from the relationship Ft between the aberration state and the light amount distribution information shown in FIG. 5. Then, the aberration control unit 48 of the control part 40 transmits the control signal S2 and sets the position of the correction ring 18 such that the aberration state of the objective lens 15 coincides generally with the aberration state Co. The microscope 1 acquires and generates a two-dimensional image of the sample 56 after setting the aberration state Co to the objective lens 15.

In the example of FIG. 5, the local minimal value Do corresponds to the optimum aberration state from the characteristics of used the light amount distribution information. However, depending on the characteristics of the used light amount distribution information, the aberration state that provides a local maximal value of the light amount distribution information in the relationship Ft between the aberration state and the light amount distribution information may be determined as an aberration state (optimum value) that should be set in the objective lens 15.

When the slice width, the standard deviation, the n-th moment, or the n-th normalization moment described above is used as the light amount distribution information, when the values of these light amount distribution information is smaller, the detection image 29a (and the interpolation detection image 29b) is sharper, that is, the aberration of the objective lens 15 is smaller. Accordingly, the computation unit 46 determines an aberration state that provides a local minimal value of the light amount distribution information in the relationship Ft shown in FIG. 5 as an aberration state that should be set in the objective lens 15.

On the other hand, when the center light amount hp or the normalization center light amount Hp described above is used as the light amount distribution information, when the values of these light amount distribution information is larger, the detection image 29a (and the interpolation detection image 29b) is sharper, that is, the aberration of the objective lens 15 is smaller. Accordingly, the computation unit 46 determines an aberration state that provides a local maximal value of the light amount distribution information in the relationship Ft shown in FIG. 5 as an aberration state that should be set in the objective lens 15.

In Step S113, the aberration control unit 48 of the control part 40 transmits the control signal S2 to the correction ring 18 of the objective lens 15 and sets the aberration state determined by the computation unit 46 in the objective lens 15 and the illumination optical system 10 and the detection optical system 20 including the objective lens 15.

Thus, the setting of the aberration state of the illumination optical system 10 and the detection optical system 20, that is, correction of the aberration associated with the variation of the thickness of the cover glass or the like is completed.

The microscope 1 then reads the detection image 29a in synchronization with the relative scan between the illumination region 55 and the sample 56 as described above and generates the image data of the sample 56.

In the embodiment described above, it is not necessary to perform all steps from Step S101 to S113.

For example, the determination as to whether or not the change in the magnification of the variable magnification optical system 24 is required in Step S107 may be performed only for the first time of the loop, and the determination may not be performed (determine that the change is not required) for the second time or later.

Alternatively, after setting a predetermined aberration state in Step S113, Step S105, Step S106, and Step S110 may be performed again, and whether or not the desired aberration state is set in the illumination optical system 10 and the detection optical system 20 may be confirmed.

Alternatively, Step S106 to Step S109 may be omitted, and a process that proceeds to Step S 110 after completing Step S105 may be performed, that is, a series of processes may be performed without changing the magnification of the variable magnification optical system 24.

In the embodiment described above, the size of the detection image 29a, that is, the size of the interpolation detection image 29b is defined by the slice width or the standard deviation; however, the size of the interpolation detection image 29b is not limited thereto.

For example, as the size of the interpolation detection image 29b, an evaluation index $\sigma1$ which is the square root of a second-order moment of the interpolation detection image 29b at the scale on the detection surface 31 represented by Expression (6) may be used.

[Formula 5]

$$\sigma 1 = \sqrt{\sum \{ (|P|)^2 \, I(P) \}}$$

$$\dots (6)$$

Alternatively, as the size of the interpolation detection image 29b, an evaluation index $\sigma 0$ which is the square root of a second-order normalization moment of the interpolation detection image 29b at the scale on the detection surface 31 represented by Expression (7) may be used.

[Formula 6]

$$\sigma 0 = \sqrt{\frac{\sum \{ (|P|)^2 \, I(P) \}}{\sum I(P)}}$$

$$\dots (7)$$

When the evaluation index $\sigma 0$ or the evaluation index $\sigma 1$ is used for the size of the interpolation detection image 29b, an upper limit value $\sigma_{MAX}$ of the evaluation index and a lower limit value $\sigma_{MIN}$ of the evaluation index which become the reference are determined in advance. In Step S107, when the evaluation index $\sigma 0$ or the evaluation index $\sigma 1$ exceeds the upper limit value $\sigma_{MAX}$ or falls below the lower limit value $\sigma_{MIN}$, a determination that it is necessary to change the magnification of the variable magnification optical system 24 may be made.

Alternatively, as the size of the interpolation detection image 29b, a correlation value between the interpolation detection image 29b and a reference detection image which becomes the reference may be adopted. In this case, in Step S 107, when the correlation value falls below a predetermined value, a determination that it is necessary to change the magnification of the variable magnification optical system 24 may be made.

Alternatively, as the size of the interpolation detection image 29b, a ratio of the sum (center sum) of the light amounts corresponding to the nine detection pixels 32 at the center of the detection image 29a to the sum (circumference sum) of the light amounts corresponding to the sixteen detection pixels 32 at the circumference of the detection image 29a may be used.

In the embodiment described above, the objective lens 15 including the correction ring 18 as the aberration setting unit that sets a predetermined aberration state is shared by the illumination optical system 10 and the detection optical system 20. However, the aberration setting unit may be separately included in the illumination optical system 10 and the detection optical system 20, or may be included only in any one of the illumination optical system 10 and the detection optical system 20.

For example, in the microscope 1 of the first embodiment shown in FIG. 1, an aberration setting lens group may be provided on at least one of a side closer to the light source unit 50 than the bifurcation mirror 11 and a side closer to the light reception optical system 21 than the bifurcation mirror 11. Here, the aberration setting lens group includes a plurality of lenses arranged along the optical axis, similarly to the objective lens 15 including the correction ring 18 and is a lens group in which the position of each lens can be moved by a movement member.

In this case, the aberration setting lens group as the aberration setting unit sets at least one of the aberration state of the illumination optical system 10 and the aberration state of the detection optical system 20. Further, the computation unit 46 determines the aberration state of at least one of the illumination optical system 10 and the detection optical system 20.

The aberration setting lens group can be the aberration setting unit similarly to the correction ring 18 of the objective lens 15.

(Effects of microscope of first embodiment)

(1) The microscope 1 of the first embodiment described above includes: an illumination optical system 10 that focuses illumination light L1 and forms an illumination region 55 on a sample 56; a detection optical system 20 that forms an image 28 by light (detection light Ld) from the sample 56 on which the illumination region 55 is formed on an image plane Imp; an aberration setting unit (the aberration control unit 48, the correction ring 18, or the like) that sets an aberration state of at least one of the illumination optical system 10 and the detection optical system 20; and a detector 30 in which a detection surface 31 having a plurality of aligned detection units (detection pixels 32) is arranged on the image plane Imp of the detection optical system 20. Further, the microscope 1 includes: a calculation unit 45 that calculates light amount distribution information of a detection image 29a detected by the plurality of detection units (detection pixels 32); and a computation unit 46 that determines an aberration state of at least one of the illumination optical system 10 and the detection optical system 20 which should be set by the aberration setting unit on the basis of the light amount distribution information of the detection image 29a in a plurality of aberration states set by the aberration setting unit.

According to this configuration, it is possible to easily correct the aberration which occurs due to the thickness error of the cover glass that covers the sample 56 or the like.

In the microscope 1 of the above first embodiment, the illumination region 55 which the illumination optical system 10 forms on the sample 56 may not necessarily be illumination light Li focused to a resolution limit determined by the numerical aperture (numerical aperture of the objective lens 15) of the illumination optical system 10 and may be larger than that.

On the other hand, by focusing the illumination light Li to the resolution limit determined by the numerical aperture of the illumination optical system 10 and forming the illumination region 55, the resolution of the image data generated by the microscope 1 can be improved.

Further, in the microscope 1 of the first embodiment, the bifurcation mirror 11 having a dichroic mirror as the wavelength selection member and the barrier filter 22 may be excluded. In this case, a half mirror without wavelength selectivity is used as the bifurcation mirror 11.

On the other hand, by including the bifurcation mirror 11 having a dichroic mirror as the wavelength selection member or the barrier filter 22, the microscope 1 can perform imaging using fluorescence, imaging using two-photon absorption, or imaging using Raman scattering light.

Further, the variable magnification optical system 24 in the detection optical system 20 of the microscope 1 of the first embodiment is not limited to a zoom optical system described above, and a configuration may be employed in which a plurality of optical systems having a different focal distance and a different position of a principal point from each other is exchanged and arranged in the optical path of the detection optical system 20.

Alternatively, the variable magnification optical system 24 may not be provided, and a fixed focal optical system in which the magnification is not changed may be used.

Since the size of the image 28 can be a size suitable for the range of the array of the plurality of detection pixels 32 on the detection surface 31 by having the variable magnification optical system 24, the light amount distribution information of the detection image 29a (or the interpolation detection image 29b) can be accurately calculated. Thereby, it is possible to accurately determine the aberration state set in objective lens 15.

Even in the case of having the variable magnification optical system 24, the change in the magnification of the variable magnification optical system 24 may be performed manually by an operator without having the magnification control unit 49.

On the other hand, by having the magnification control unit 49, it becomes possible to automatically change the magnification of the variable magnification optical system 24, and it is possible to easily determine the aberration state that should be set for correcting the aberration which occurs due to the thickness error of the cover glass or the like.

(Microscope of second embodiment)

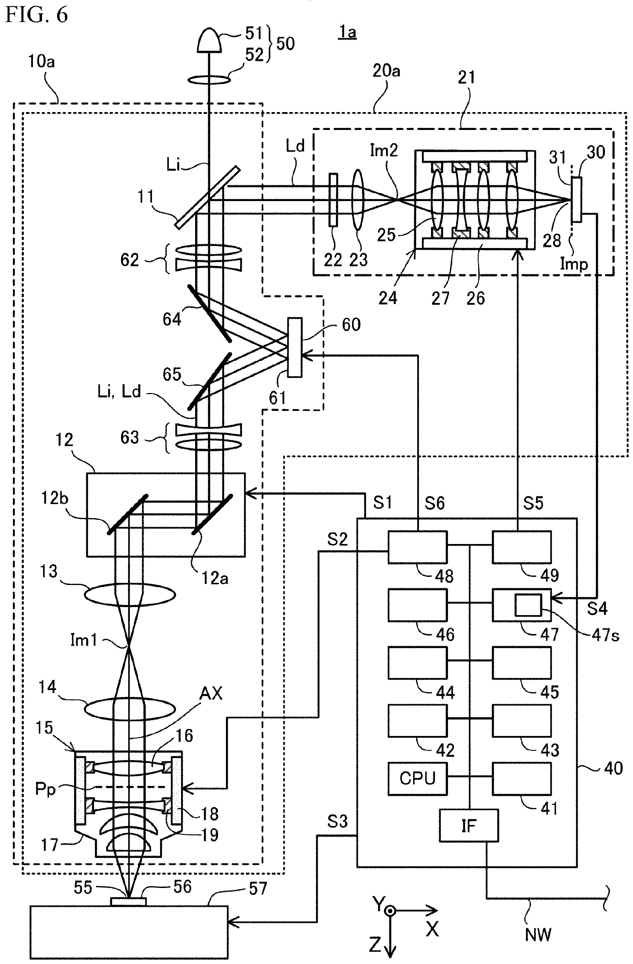

FIG. 6 is a view schematically showing a configuration of a microscope 1a of a second embodiment. Most of the configuration of the microscope 1a of the second embodiment is common to that of the microscope 1 of the first embodiment described above. Accordingly, in the following description, the configuration common to the microscope 1 of the first embodiment is given by the same reference numeral, and description thereof may be omitted.

The microscope 1a of the second embodiment differs from the microscope 1 of the first embodiment in that the microscope 1a includes a deformable mirror 60 and the like between the bifurcation mirror 11 and the deflection unit 12 in the illumination optical system 10 and the detection optical system 20. In the microscope 1a of the second embodiment, the illumination light Li that transmits through the bifurcation mirror 11 passes through the relay lens 62, is reflected by a folding mirror 64, and enters a reflection surface 61 of the deformable mirror 60.

The illumination light Li reflected by the reflection surface 61 is then reflected by a folding mirror 65, passes through a relay lens 63, and enters the deflection unit 12. The configuration of the illumination optical system 10 and the detection optical system 20 from the deflection unit 12 to the sample 56 is similar to the configuration of those in the microscope 1 of the first embodiment described above.

The reflection surface 61 of the deformable mirror 60 is arranged on a plane conjugate to the pupil plane Pp of the objective lens 15 or the vicinity thereof through the relay lens 14, the relay lens 13, the deflection unit 12, the relay lens 63, and the folding mirror 65. The reflection surface 61 of the deformable mirror 60 is arranged, as an example, perpendicular to the X direction.

The deformable mirror 60 is an optical element in which the shape of the reflection surface 61 is deformed arbitrarily within a predetermined range in a normal direction (X direction) of the reflection surface 61 in response to a control signal S6 that is applied from the outside. Accordingly, aberration (wavefront aberration) corresponding to the shape of the reflection surface 61 is given to the illumination light Li reflected at the reflection surface 61 of the deformable mirror 60.

The illumination region 55 in which the illumination light Li is focused is formed on the sample 56, and light from the illumination region 55 becomes detection light Ld and enters the relay lens 63 through the objective lens 15 and the deflection unit 12. Then, the detection light Ld is reflected at the folding mirror 65 and enters the reflection surface 61 of the deformable mirror 60.

Aberration (wavefront aberration) corresponding to the shape of the reflection surface 61 is given to the detection light Ld reflected at the reflection surface 61 of the deformable mirror 60.

The detection light Ld reflected at the reflection surface 61 is then reflected at the folding mirror 64, passes through the relay lens 62, and arrives at the bifurcation mirror 11. Then, the detection light Ld is reflected at the bifurcation mirror 11, enters the light reception optical system 21, and forms an image 28 on the detection surface 31 of the detector 30.

The aberration control unit 48 of the control part 40 transmits a control signal S2 to the correction ring 18 of the objective lens 15, transmits a control signal S6 to the deformable mirror 60, and causes the shape of the reflection surface 61 of the deformable mirror 60 to be a predetermined shape. Thereby, the aberration states of the illumination optical system 10 and the detection optical system 20 are set to a predetermined state.

In the microscope 1a of the second embodiment, by the flow shown in FIG. 3, the aberration states of the detection optical system 20 and the illumination optical system 10 can be determined. However, in the microscope 1a of the second embodiment, the aberration states of the detection optical system 20 and the illumination optical system 10 are set by setting the shape of the reflection surface 61 of the deformable mirror 60. The aberration state may be set by both the setting of the shape of the reflection surface 61 of the deformable mirror 60 and the setting of the position of the correction ring 18 of the objective lens 15.

In the microscope 1a of the second embodiment, any aberration state can be set by changing the shape of the reflection surface 61 of the deformable mirror 60. That is, an aberration state having a wavefront aberration represented by a predetermined function can be set. Since the wavefront aberration of the optical system is represented as a deviation amount of the wavefront from a reference wavefront in the pupil plane of the optical system, hereinafter, the wavefront aberration set by the reflection surface 61 of the deformable mirror 60 is represented by being converted onto a polar coordinate within the pupil plane Pp of the objective lens 15.

As described above, the reflection surface 61 of the deformable mirror 60 is arranged at a position conjugate with respect to the pupil plane Pp of the objective lens 15. Accordingly, it is possible for a skilled person in the art to easily convert the position on the polar coordinate within the pupil plane Pp of the objective lens 15 into a position on the reflection surface 61 of the deformable mirror 60 in consideration of the imaging magnification from the pupil plane Pp to the reflection surface 61.

Accordingly, in the following description, generating a predetermined wavefront aberration at the pupil plane Pp of the objective lens 15 by deforming the shape of the reflection surface 61 of the deformable mirror 60 is simply referred to as generating a predetermined wavefront aberration by deforming the shape of the reflection surface 61 of the deformable mirror 60.

The illumination light Li and the detection light Ld enter the reflection surface 61 from a direction inclined in the Z direction relative to the normal direction (X direction) of the reflection surface 61 of the deformable mirror 60. Accordingly, the shapes of the illumination light Li and the detection light Ld at the reflection surface 61 are not a circular shape but becomes an ellipse having a long axis coinciding with the Z direction. However, with respect to such deformation (elongation in the Z direction), by correcting such deformation, it is also possible for a skilled person in the art to easily convert the position on the polar coordinate within the pupil plane Pp of the objective lens 15 into a position on the reflection surface 61 of the deformable mirror 60.

In the following description, the position within the pupil plane Pp of the objective lens 15 is represented by a polar coordinate $(\rho, \theta)$. The origin (0, 0) of the polar coordinate is an intersection point between the optical axis AX and the pupil plane Pp. The radius $\rho$ is a value obtained by dividing a distance of any point within the pupil plane Pp from the origin (0, 0) by the radius of a light beam of the illumination light Li or the detection light Ld, that is, a distance from the optical axis AX normalized by the radius of the light beam of the illumination light Li or the detection light Ld. The azimuth angle $\theta$ is an angle in a counterclockwise direction represented by the direction from the origin (0, 0) to any point within the pupil plane Pp, as an example, with reference to the +X direction.

By using this polar coordinate $(\rho, \theta)$, the wavefront aberration is represented as a wavefront aberration $W(\rho, \theta)$.

As an example of the wavefront aberration $W(\rho, \theta)$ set by the reflection surface 61 of the deformable mirror 60, aberration represented by the so-called Zernike polynomial expression shown in the following Expression (8) to Expression (10) may be used. The Zernike polynomial expression is obtained by adding a plurality of terms obtained by multiplying a predetermined coefficient $\alpha_{nm}$ by the wavefront aberration function $Z_n^m(\rho, \theta)$ represented by Expression (9). The coefficient $\alpha_{nm}$ is a coefficient commonly referred to as the Zernike coefficient.

[Formula 7]

$$W(\rho, \theta) = \sum_n \sum_m \alpha_{nm} Z_n^m(\rho, \theta)$$

$$\ldots (8)$$

[Formula 8]

$$Z_n^m(\rho, \theta) = \begin{cases} R_n^m(\rho) \cos(m\theta) & m \geq 0 \\ R_n^m(\rho) \sin(|m|\theta) & m < 0 \end{cases}$$

$$\ldots (9)$$

[Formula 9]

$$R_n^m(\rho) = \sum_{k=0}^{\frac{n-|m|}{2}} \frac{(-1)^k (n-k)!}{k! \left(\frac{n+m}{2} - k\right)! \left(\frac{n-m}{2} - k\right)!} \rho^{n-2k}$$

$$\ldots (10)$$

Each of n and m in Expression (8) to Expression (10) is referred to as an index number, the index number n is an arbitrary integer equal to or more than 0, and the index number m is an arbitrary integer of which the absolute value is equal to or less than n and in which (n-m) is an even number. The coefficient $\alpha_{nm}$ in Expression (8) is indicated by adding n and m as the subscript. The $R_n^m(\rho)$ in Expression (10) is referred to as a so-called radial polynomial expression and represents a function with respect to the radius $\rho$. The k in Expression (10) is an integer.

When the wavefront aberration $W(\rho, \theta)$ by the Zernike polynomial expression represented by Expression (8) is set to the detection optical system 20 and the illumination optical system 10 by the reflection surface 61 of the deformable mirror 60, a process described below is performed in the flow shown in FIG. 3.

Every time Step S104 is performed in the loop from Step S103 to Step S111, the aberration control unit 48 of the control part 40 transmits the control signal S6 to the deformable mirror 60 and sets the k-th aberration state to the reflection surface 61 of the deformable mirror 60.

At the first time (k = 1) of the loop, the aberration control unit 48 sets the wavefront aberration $W(\rho, \theta)$ in the aberration state in which each value of the coefficient $\alpha_{nm}$ in Expression (8) is set to a predetermined value in Step S104 to the reflection surface 61 of the deformable mirror 60.

In the second time or later (k>_2) of the loop, in Step S104, the aberration control unit 48 sets the wavefront

aberration $W (\rho, \theta)$ in which only the value of the coefficient $\alpha_{n0m0}$ having predetermined index numbers n0 and m0 as the subscript among the coefficient $\alpha_{nm}$ of Expression (8) is changed every time to the reflection surface 61 of the deformable mirror 60.

Accordingly, when the loop from Step S103 to Step S111 is performed K times, the light amount distribution information is measured for each of the aberration states of K types in which the coefficient $\alpha_{n0m0}$ is changed in K types as shown in FIG. 5 described above.

In Step S112, the computation unit 46 of the control part 40 determines the value of the coefficient $\alpha_{n0m0}$ corresponding to the aberration state Co that provides a local minimal value Do (or a local maximal value) of the light amount distribution information from the relationship Ft between the aberration state (coefficient $\alpha_{n0m0}$) and the light amount distribution information shown in FIG. 5.

Then, in Step S113, the aberration control unit 48 of the control part 40 sets the aberration state based on the wavefront aberration $W (\rho, \theta)$ represented by using the value of the determined coefficient $\alpha_{n0m0}$ to the reflection surface 61 of the deformable mirror 60.

The aberration state set to the reflection surface 61 of the deformable mirror 60 in Step S104 may be an aberration state based on the wavefront aberration $W (\rho, \theta)$ in which all of the coefficients $\alpha_{nm}$ other than the value of the predetermined coefficient $\alpha_{n0m0}$ described above among the coefficients $\alpha_{nm}$ of Expression (8) are 0.

When the aberration state set to the reflection surface 61 of the deformable mirror 60 is determined using the aberration represented by the Zernike polynomial expression described above, an amount corresponding to the peak intensity of the light amount distribution of the detection image 29a or the interpolation detection image 29b may be calculated as the light amount distribution information described above. This is because the peak intensity of the light amount distribution of the image 28 and the detection image 29a is changed sensitively with respect to the change of the Zernike coefficient (coefficient $\alpha_{n0m0}$).

In the method described above, the computation unit 46 only determines the Zernike coefficient (coefficient $\alpha_{n0m0}$) in one term in the Zernike polynomial expression; however, a plurality of Zernike coefficients (coefficients $\alpha_{n0m0}$) may be determined by a method described below.

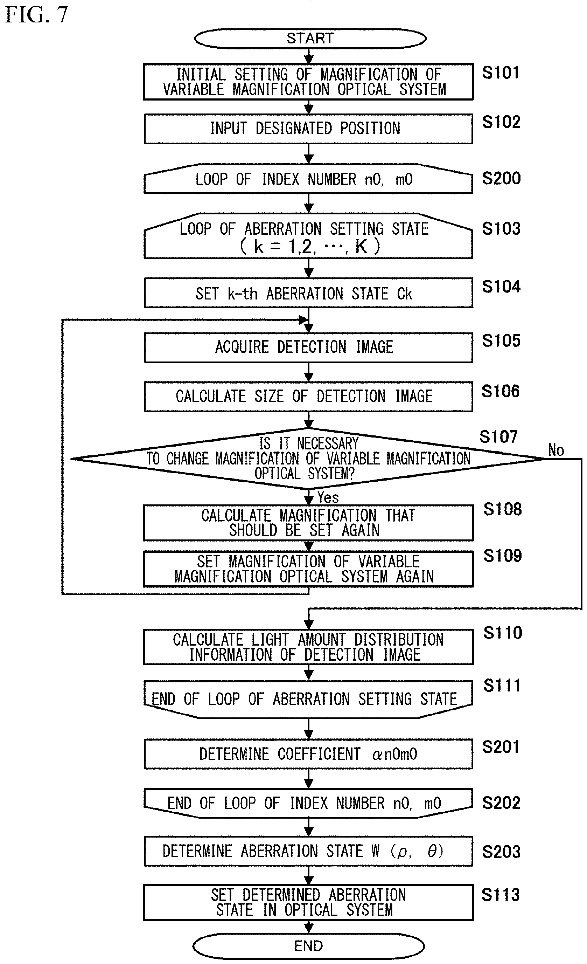

FIG. 7 is a view showing an example of a flow for determining an aberration state in the microscope of the second embodiment, and shows a flow for determining a plurality of Zernike coefficients (coefficients $\alpha_{n0m0}$). However, most of the flow shown in FIG. 7 is similar to the flow shown in FIG. 3. Hereinafter, the same reference numeral is given to a portion common to the flow shown in FIG. 3, description thereof may be omitted, and the differences are mainly described.

The flow shown in FIG. 7 includes Step S200 between Step S102 and Step S103 and includes Step S201 to Step S203 between Step S111 and Step S113. Step S200 to Step S202 constitute a loop relating to the predetermined index number n0 and the predetermined index number m0 described above. That is, in the flow shown in FIG. 7, in each time of the loop from Step S200 to Step S202, a different optimum value of the Zernike coefficient (coefficient $\alpha_{n0m0}$) is obtained.

The loop from Step S200 to Step S202 which is a loop relating to the predetermined index number n0 and the predetermined index number m0 includes the loop from Step S103 to Step S111. In Step S104, in each time of the loop from Step S103 to Step S111, different settings of K types are performed with respect to the value of the coefficient $\alpha_{n0m0}$ designated by the predetermined index number n0 and the predetermined index number m0.

In Step S201, in each time of the loop from Step S200 to Step S202, the computation unit 46 determines the optimum value of the coefficient $\alpha_{n0m0}$ on the basis of the relationship Ft (refer to FIG. 5) between the value (aberration state) of the coefficient $\alpha_{n0m0}$ of K types and the light amount distribution information of K types.

Accordingly, after the loop from Step S200 to Step S202 which is the loop relating to the predetermined index number n0 and the predetermined index number m0 is completed a predetermined time, an optimum value is determined for each of the plurality of coefficients $\alpha_{n0m0}$.

In Step S203, the computation unit 46 determines the aberration state that should be set in the reflection surface 61 of the deformable mirror 60 from the wavefront aberration $W (\rho, \theta)$ of Expression (8) on the basis of the plurality of optimum coefficients $\alpha_{n0m0}$. Then, in Step S113, the aberration control unit 48 transmits the control signal S6 to the deformable mirror 60 and sets the aberration state described above to the reflection surface 61 of the deformable mirror 60.

As an example of the wavefront aberration $W (\rho, \theta)$ set by the reflection surface 61 of the deformable mirror 60, an aberration represented by the so-called Lukosz-Zernike polynomial expression shown in the following Expression (11) to Expression (13) may be used instead of the Zernike polynomial expression. Similarly to the Zernike polynomial expression described above, the Lukosz-Zernike polynomial expression is also obtained by adding a plurality of terms obtained by multiplying a predetermined coefficient $\alpha_{nm}$ by the wavefront aberration function $L_n^m (\rho, \theta)$ represented by Expression (9).

[Formula 10]

$$W(\rho, \theta) = \sum_{n} \sum_{m} \alpha_{nm} L_n^m(\rho, \theta)$$

$$\ldots (11)$$

[Formula 11]

$$L_n^m(\rho, \theta) = \begin{cases} B_n^m(\rho) \cos(m\theta) & m \geq 0 \\ B_n^m(\rho) \sin(|m|\theta) & m < 0 \end{cases}$$

$$\ldots (12)$$

[Formula 12]

$$B_n^m(\rho) = \begin{cases} \dfrac{1}{\sqrt{4n}}\left(R_n^0(\rho) - R_{n-2}^0(\rho)\right) & m = 0 \\ \dfrac{1}{\sqrt{2n}}\left(R_n^m(\rho) - R_{n-2}^m(\rho)\right) & m \neq n \neq 0 \\ \dfrac{1}{\sqrt{n}} R_n^n(\rho) & m = n \neq 0 \end{cases}$$

$$\ldots (13)$$

The index number n and the index number m in Expression (11) to Expression (13) are similar to the index number n and the index number m in Expression (8) to Expression (10) described above. The coefficient $\alpha_{nm}$ in Expression (11) is indicated by adding n and m as the subscript.

The $B_n^m(\rho)$ in Expression (13) is referred to as a so-called radial polynomial expression and represents a function with respect to the radius $\rho$. The $R_n^m(\rho)$ or the like in Expression (13) is represented by substituting the value of each of the subscripts at the upper right and the lower right of $R_n^m(\rho)$ or the like in Expression (13) for the subscript m at the upper right and the subscript n at the lower right of $R_n^m(\rho)$ in Expression (10) described above.

When the wavefront aberration W $(\rho, \theta)$ by the Lukosz-Zernike polynomial expression represented by Expression (11) is set in the detection optical system 20 and the illumination optical system 10 by the reflection surface 61 of the deformable mirror 60, a flow similar to that in the case where the wavefront aberration function by the Zernike polynomial expression described above is set.

However, when the aberration state set in the reflection surface 61 of the deformable mirror 60 is determined using the aberration represented by the Lukosz-Zernike polynomial expression, the second-order moment of the light amount distribution of the detection image 29a or the interpolation detection image 29b or the second-order normalization moment may be calculated as the light amount distribution information described above.

The second-order moment of the light amount distribution is an amount represented as n=2 (second-order) in the n-th moment $m_n$ represented by Expression (2) described above. Alternatively, the second-order normalization moment is an represented as n=2 in the n-th normalization moment $M_n$ represented by Expression (3) described above.

In the microscope 1a of the second embodiment, a reflection-type spatial light phase modulator using a liquid crystal or the like may be used instead of the deformable mirror 60.

Alternatively, a transmission-type spatial light phase modulator using a liquid crystal or the like may be used instead of the optical members described above from the folding mirror 64 to the deformable mirror 60 and the folding mirror 65.

As described above, the deformable mirror 60 sets the aberration state of the light reflected at the reflection surface 61 by changing the shape of the reflection surface 61 as the optical member of the deformable mirror 60.

On the other hand, the reflection-type and the transmission-type spatial light phase modulators set the aberration state of the light reflected at or transmitted through the spatial light phase modulator by changing the refractive index distribution of the internal liquid crystal or the like.

Accordingly, the reflection surface 61 of the deformable mirror 60, the reflection-type spatial light phase modulator, and the transmission-type spatial light phase modulator can be referred to as an optical member that changes at least one state (shape, refractive index distribution) and sets the aberration state.

When the aberration state of the illumination optical system 10 and the detection optical system 20 can be set to a predetermined state by an optical member of which the state changes such as the reflection surface 61 of the deformable mirror 60 described above, the correction ring 18 of the objective lens 15 is not required.

In the microscope 1a of the second embodiment, a combination of the aberration control unit 48 and the optical member of which the state changes can be referred to as the aberration setting unit that sets the aberration state of the detection optical system 20 and the illumination optical system 10.

(Effects of microscope of second embodiment)

(2) The microscope 1a of the second embodiment includes, in addition to the microscope 1 of the second embodiment, a configuration in which the aberration setting unit (the aberration control unit 48, the correction ring 18 and the like, or the deformable mirror 60 and the like) changes the state of at least one of the optical members (the reflection surface 61 and the like) included in at least one of the detection optical system 20 and the illumination optical system 10 and sets the aberration state.

According to this configuration, it is possible to set a wavefront aberration having a complex distributional shape in at least one of the detection optical system 20 and the illumination optical system 10, and it is possible to correct the aberration which occurs due to the thickness error of the cover glass that covers the sample 56 or the like with higher accuracy.

(3) When detecting each of the detection images 29a in a plurality of aberration states, the aberration setting unit (the aberration control unit 48, the correction ring 18 and the like, or the deformable mirror 60 and the like) sets, in at least one of the detection optical system 20 and the illumination optical system 10, each wavefront aberration $W (\rho, \theta)$ obtained by multiplying one or at least two of one or more wavefront aberration functions ($Z_n^m (\rho, \theta)$, $L_n^m (\rho, \theta)$) represented by using the radius $\rho$ from the optical axis AX normalized by the radius of the light beam of the detection optical system 20 and the illumination optical system 20 and the azimuth angle $\theta$ by a different proportional coefficient (coefficient $\alpha_{nm}$). Then, the computation unit 46 determines the wavefront aberration obtained by accumulating the multiplications of the one or more wavefront aberration functions by each of predetermined proportional coefficients as the aberration state of at least one of the detection optical system 20 and the illumination optical system 10 that should be set by the aberration setting unit.

According to this configuration, by using the polynomial expression of the aberration function, it is possible to represent the aberration state that should be set in the detection optical system 20 or the illumination optical system 10, and it is possible to determine an optimum aberration state with high accuracy.

(Modification example of light reception optical system and control part)

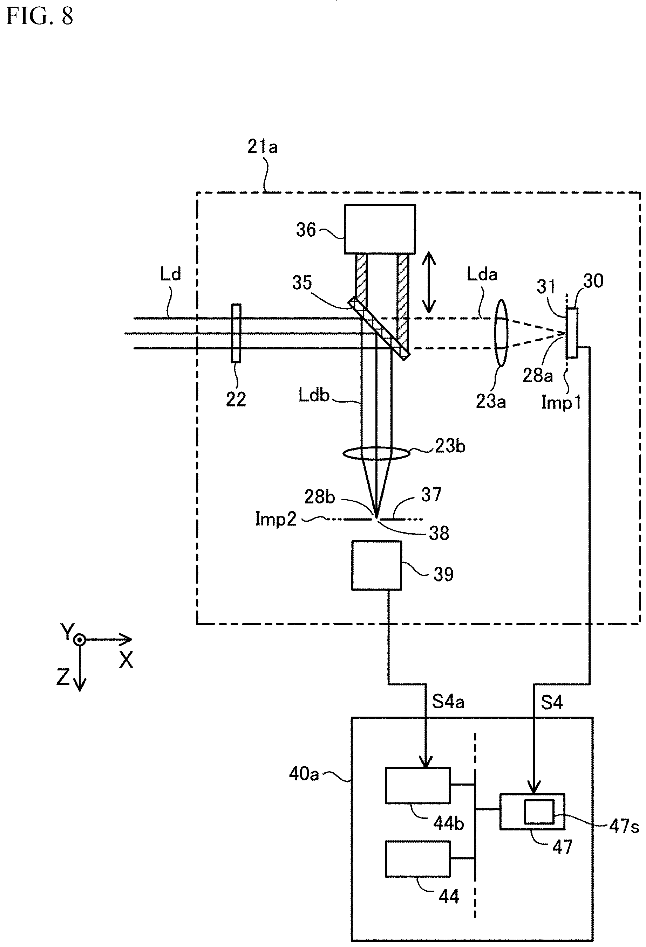

FIG. 8 is a view showing a light reception optical system 21a and a control part 40a which are modification examples of the light reception optical system 21 and the control part 40 in the microscope 1 of the first embodiment and the microscope 1a of the second embodiment described above. The control part 40a has a second image data generation unit 44b added to the control part 40 described above. However, in FIG. 8, components other than the data acquisition unit 47, the accumulation portion 47s, the image data generation unit 44, and the second image data generation unit 44b are not shown.

The light reception optical system 21a of the modification example includes a reflection mirror 35 that reflects and deflects the detection light Ld transmitting through the barrier filter 22 to a second image plane Imp2 of the detection optical system 20 (refer to FIG. 1 and FIG. 6). The reflection mirror 35 is arranged to be movable in the Z direction by a holding portion 36, that is, to be attachable to and detachable from the optical path of the detection light Ld.

In a state (a state shown in FIG. 8) where the reflection mirror 35 is arranged on the optical path of the detection light Ld, the detection light Ld is reflected by the reflection mirror 35, becomes detection light Ldb, is focused by a focusing lens 23b, and forms an image 28b of the illumination region 55 (refer to FIG. 1 and FIG. 6) on the second image plane Imp2.

A light shield unit 37 in which a substantially circular opening 38 is formed is arranged on the second image plane Imp2, and light focused to the center and the vicinity thereof of the image 28b of the detection light Ldb transmits through the opening 38, and the light amount is detected by a light amount detector 39. Light distributed outside the center and the vicinity thereof of the image 28b of the detection light Ldb is shielded by the light shield unit 37 and is not detected by the light amount detector 39.

Accordingly, the configuration from the reflection mirror 35 to the focusing lens 23b, the light shield unit 37, and the light amount detector 39 has a configuration similar to a light reception unit of a usual confocal microscope.

The light amount detected by the light amount detector 39 is photoelectrically converted, is then converted to a digital signal, and is output as a light amount signal S4a. The second image data generation unit 44b of the control part 40a reads the light amount signal S4a in synchronization with the relative scan between the illumination region 55 and the sample 56 and generates second image data which is a relation between the light amount of the light amount signal S4a and the relative position relationship between the illumination region 55 and the sample 56. The generation of the second image data by the second image data generation unit 44b is similar to the generation of the image data in a usual confocal microscope.

The size (diameter) of the opening 38 formed in the light shield unit 37 is, as an example, a size of 0.2 times or more and 10 times or less of the resolution on the second image plane Imp2 side of the detection optical system 20. The resolution on the second image plane Imp2 side of the detection optical system 20 is a value obtained by $0.61 \times \lambda2/NA$ when the wavelength of the detection light Ldb is $\lambda2$ and the numerical aperture on the detector side of the detection optical system 20 toward the image plane Imp2 is NA.

When the size (diameter) of the opening 38 is smaller than 0.2 times of the resolution described above, since the light amount passing through the opening 38 is reduced, the S/N of the second image data is decreased. On the other hand, when the size (diameter) of the opening 38 is larger than 10 times of the resolution described above, the function as a confocal microscope is weakened, and the resolution of the second image data is decreased.

On the other hand, in a state where the reflection mirror 35 is retracted from the optical path of the detection light Ld, the detection light Ld proceeds straight, becomes detection light Lda, is focused by a focusing lens 23a, and forms an image 28a of the illumination region 55 (refer to FIG. 1 and FIG. 6) on the first image plane Imp1. The detection surface 31 of the detector 30 having a plurality of detection pixels 32 is arranged on the first image plane Imp1 similarly to the light reception optical systems 21 in the first embodiment and the second embodiment described above.

The detection image 29a (refer to FIG. 1 and FIG. 6) of the image 28a detected by the plurality of detection pixels 32 is transmitted to the data acquisition unit 47 of the control part 40a as the light amount signal S4 in the same manner as the microscopes 1 and 1a of the first embodiment and the second embodiment described above.

The control part 40a determines the aberration state that should be set on the basis of the detection image 29a and sets the determined aberration state in the illumination optical system 10 and the detection optical system 20 in the same manner as the control part 40 of the first embodiment and the second embodiment described above. Then, the control part 40a reads the detection image 29a in synchronization with the relative scan between the illumination region 55 and the sample 56 as described above and generates image data of the sample 56.

The image data generation unit 44 that generates the image data from the detection image 29a can also be referred to as the first image data generation unit 44 in order to distinguish the image data generation unit 44 from the second image data generation unit 44b described above. Further, the image data generated from the detection image 29a can also be referred to as first image data in order to distinguish the first image data from the second image data generated by the second image data generation unit 44b on the basis of the light amount signal S4a.

The detection image 29a detected by the plurality of detection pixels 32 of the detector 30 may be used only for determining the aberration state that should be set in the illumination optical system 10 and the detection optical system 20. In this configuration, since the detector 30 is not used for generating the image data, even a detector having a slow read cycle time, that is, a low-cost detector can be used as the detector 30.

In the embodiment described above, the deformable mirror 60 as the aberration setting unit that sets a predetermined aberration state is shared by the illumination optical system 10 and the detection optical system 20. However, the deformable mirror 60 may be included separately in the illumination optical system 10 and the detection optical system 20 or may be included only in one of the illumination optical system 10 and the detection optical system 20.

For example, in the microscope 1a of the second embodiment shown in FIG. 6, the deformable mirror 60 may be provided on at least one of a side closer to the light source unit 50 than the bifurcation mirror 11 and a side closer to the light reception optical system 21 than the bifurcation mirror 11.

In this case, the deformable mirror 60 as the aberration setting unit sets at least one of the aberration state of the illumination optical system 10 and the aberration state of the detection optical system 20. Further, the computation unit 46 determines the aberration state of at least one of the illumination optical system 10 and the detection optical system 20.

(Modification example of detector)

In the embodiments described above, the detector 30 is arranged directly at the position of the image 28 of the illumination region 55. However, for example, as disclosed in Patent Document 1, a configuration can be also employed in which one end (incidence end) of a light distribution element such as an optical fiber bundle is arranged at the position of the image 28 of the illumination region 55, and a photoelectric conversion unit is arranged at the other end (emission end) of the light distribution element.

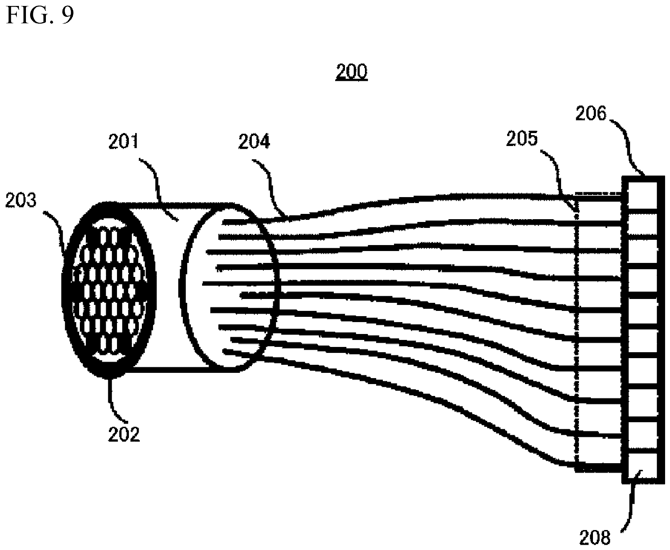

FIG. 9 is a view showing the entire detector 200 of the modification example. The detector 200 of the modification example includes a photoelectric detector array 206 arranged in one dimension and an optical fiber bundle 201 that supplies light to the photoelectric detector array 206. The optical fiber bundle 201 is formed of a single optical fiber 204.

One end (incidence end) 202 of the optical fiber bundle 201 is arranged on a plane on which the image 28 of the illumination region 55 is formed, and each single optical fiber 204 is densely aligned at the one end 202. The other end (emission end) of the individual optical fiber 204 within the optical fiber bundle 201 is arranged along a plug 205 extending in a one-dimensional direction. The other end (emission end) of each optical fiber 204 faces each photoelectric conversion surface 208 of the photoelectric detector array 206 arranged in one dimension. The optical fiber bundle 201 corresponds to a light distribution element that distributes light. The optical distribution element is not limited to the optical fiber bundle, and other existing waveguides can be used.

The diameter of the incidence end of each optical fiber 204 (accurately, the diameter of a core of the fiber) can be desirably set to, for example, about $0.2 \times \lambda$/NA when converted to the length on the sample 56 when the wavelength of the illumination light Li is $\lambda$ and the numerical aperture of the objective lens 15 is NA. In order to enhance the light collection efficiency to each optical fiber 204, a light collection element array such as a microlens array may be arranged on a front surface of the incidence end of each optical fiber 204. In this case, a configuration may be employed in which, for example, the incidence end of each optical fiber 204 is arranged at a position of the image formed through the light collection element array.

By using the light distribution element such as the optical fiber bundle, the degree of freedom of the arrangement of the photoelectric conversion unit is increased, and it becomes possible to use a larger photoelectric conversion unit. Thereby, a highly sensitive and highly responsive photoelectric conversion unit such as a PIN photodiode or a photomultiplier tube can be used, and the S/N ratio of the two-dimensional image of the sample 56 can be improved.

The incidence end 202 of the optical fiber bundle 201 is a portion in which the incidence end of the optical fiber that detects (photoelectrically converts) light using the photoelectric conversion unit arranged at the downstream side thereof is aligned in two dimensions and can be therefore interpreted as a plurality of detection units that are aligned in two dimensions.

(Embodiment of program)

As already described in the explanation of the microscope 1 of the first embodiment and the microscope 1a of the second embodiment, the program of the embodiment is stored in the storage unit 41 of the control part 40 and executed by the CPU and thereby controls the microscopes 1, 1a through each portion of the control part 40.

The program causes the microscopes 1, 1a to perform a predetermined operation through the control part 40 in accordance with the flow shown in FIG. 3 or the flow shown in FIG. 7, and the above-described flow modified from the flows. As an example, the program causes the data acquisition unit 47 to acquire the image 28 of the illumination region 55 on the sample 56 to which the illumination light Li by the illumination optical system 10 is focused as the detection image 29a detected by the plurality of detection pixels 32 arranged at the image plane Imp, Imp1 of the detection optical system 20. At this time, the program causes the data acquisition unit 47 to acquire a plurality of detection images 29a in a state where the aberration states of the illumination optical system 10 or the detection optical system 20 are different from each other.

The program causes the calculation unit 45, through the control part 40, to calculate the light amount distribution information of each of the plurality of detection images 29a and causes the computation unit 46, through the control part, to determine the aberration state that should be set in the detection optical system 20 or the illumination optical system 10 on the basis of the plurality of light amount distribution information.

The program for implementing the functions described above may be recorded on a computer-readable recording medium, and the program recorded on the recording medium may be read from the optical drive 42 or the like into the control part 40 as a computer system and be executed.

The "computer system" described here is assumed to include an OS (Operating System) and hardware such as peripheral devices. Further, the "computer-readable recording medium" refers to a portable recording medium such as a flexible disk, a magneto-optical disc, an optical disk, or a memory card or a storage device such as a hard disk embedded in the computer system.

Further, the "computer-readable recording medium" may include a computer-readable recording medium for dynamically retaining the program for a short period of time as in a communication line when the program is transmitted via a network such as the Internet or a communication circuit such as a telephone circuit and a computer-readable recording medium for retaining the program for a given period of time as in a volatile memory inside the computer system including a server and a client in that case. Further, the program described above may be a program for implementing some of the functions described above. Further, the program described above may be a program that implements the functions described above in combination with a program already recorded in the computer system.

Further, the program described above can be provided through a data signal of the Internet or the like. For example, the control part 40 including the CPU and the storage unit 41 in FIG. 1 or FIG. 6 has a connection function (interface unit IF) with a network cable NW. An external server (not shown) connected to the network functions as a server computer providing the program described above and transfers the program to a recording medium such as the storage unit 41. That is, the program is carried by a carrier wave as a data signal and is transmitted via the network cable NW. In this way, the program can be supplied as a computer-readable computer program product in various forms such as the recording medium or the carrier wave.

Although various embodiments and modification examples have been described above, the present invention is not limited to these contents. Further, the embodiments and modification examples may be applied independently or may be used in combination. Other embodiments conceivable within the technical idea of the present invention are also included in the scope of the present invention. Further, to the extent permitted by the law, the disclosures of all cited documents (patent documents and articles) are incorporated as part of the description of the text.

DESCRIPTION OF THE REFERENCE SYMBOLS

| | |
|---|---|
| 1, 1a | Microscope |
| 10, 10a | Illumination optical system |
| 11 | Bifurcation mirror |
| 12 | Deflection unit |
| 13, 14 | Relay lens |
| 15 | Objective lens |
| 18 | Correction ring |
| 20, 20a | Detection optical system |
| 21 | Light reception optical system |
| 24 | Variable magnification optical system |
| 28 | Image |
| 29a | Detection image |
| 29b | Interpolation detection image |
| 30 | Detector |
| 31 | Detection surface |
| 32 | Detection pixel |
| Li | Illumination light |
| Ld | Detection light |
| 40 | Control part |
| 44 | Image data generation unit |
| 44b | Second image data generation unit |
| 45 | Calculation unit |
| 46 | Computation unit |
| 47 | Data acquisition unit |
| 47s | Accumulation portion |
| 48 | Aberration control unit |
| 49 | Magnification control unit |
| 50 | Light source unit |
| 55 | Illumination region |
| 56 | Sample |
| 57 | Stage |
| 60 | Deformable mirror |
| 61 | Reflection surface |

**Claims**

1. A microscope comprising:

an illumination optical system that focuses illumination light and forms an illumination region on a sample;
a detection optical system that forms an image by light from the sample on which the illumination region is formed on an image plane;
an aberration setting unit that sets an aberration state of at least one of the illumination optical system and the detection optical system;
a detector in which a detection surface having a plurality of aligned detection units is arranged on the image plane of the detection optical system;
a calculation unit that calculates light amount distribution information of a detection image detected by the plurality of detection units; and
a computation unit that determines an aberration state of at least one of the illumination optical system and the detection optical system which should be set by the aberration setting unit based on the light amount distribution information of the detection image in a plurality of aberration states set by the aberration setting unit.

2. The microscope according to claim 1,
wherein the illumination optical system focuses the illumination light to a resolution limit determined by a numerical aperture of the illumination optical system and forms the illumination region.

3. The microscope according to claim 1 or 2,
wherein the detection optical system includes a wavelength selection member that causes light having a wavelength identical to a wavelength of the illumination light among the light from the sample on which the illumination region is formed not to arrive at the detector and causes light having a different wavelength from the wavelength of the illumination light to arrive at the detector.

4. The microscope according to any one of claims 1 to 3,
wherein the calculation unit calculates, as the light amount distribution information, an amount corresponding to a width of light amount distribution of the detection image.

5. The microscope according to any one of claims 1 to 3,
wherein the calculation unit calculates, as the light amount distribution information, an n-th moment (n is an integer of 2 or more) of light amount distribution of the detection image or an n-th normalization moment obtained by dividing the n-th moment of the light amount distribution of the detection image by an integration value of the light amount distribution of the detection image.

6. The microscope according to any one of claims 1 to 5,
wherein the detection optical system includes a variable magnification optical system that changes a size of the image on the image plane.

7. The microscope according to claim 6, comprising:
a magnification control unit that controls the variable magnification optical system such that the size of the image on the image plane is predetermined times of a width of a region in which the detection units of the detector are arranged.

8. The microscope according to any one of claims 1 to 7, further comprising:
a scanning portion that relatively scans the illumination region and the sample while maintaining a conjugate relationship between the illumination region and the image plane.

9. The microscope according to claim 8, comprising:
an accumulation portion that accumulates the image by the light from the sample on which the illumination region is scanned and detects the accumulated image as the detection image.

10. The microscope according to claim 8 or 9, further comprising:
a first image data generation unit that reads the detection image in synchronization with the scan between the illumination region and the sample, generates intermediate image data of the sample for each of the plurality of detection units, performs positional shift and addition of a plurality of the generated intermediate image data in accordance with a position within the image plane of a corresponding detection unit among the detection units, and generates first image data of the sample.

11. The microscope according to claim 8 or 9, further comprising:

a light shield unit that includes, on the image plane of the detection optical system, an opening having a size of 0.2 times or more and 10 times or less of a resolution on a side of the image plane of the detection optical system;
a light reception unit that receives light from the sample passing through the opening; and
a second image data generation unit that reads a light amount of the light received by the light reception unit in synchronization with the scan between the illumination region and the sample and generates second image data of the sample.

12. The microscope according to any one of claims 1 to 11,
wherein the aberration setting unit moves at least part of an optical member included in at least one of the detection optical system and the illumination optical system and sets an aberration state.

13. The microscope according to any one of claims 1 to 11,
wherein the aberration setting unit changes at least one state of an optical member included in at least one of the detection optical system and the illumination optical system and sets an aberration state.

14. The microscope according to claim 13,

wherein when detecting each of detection images in a plurality of aberration states, the aberration setting unit sets, in at least one of the detection optical system and the illumination optical system, each wavefront aberration obtained by multiplying one of at least two of one or more wavefront aberrations W ($\rho$, $\theta$) represented by using a radius $\rho$ from an optical axis normalized by a radius of a light beam of the detection optical system or the illumination optical system and an azimuth angle $\theta$ by a different proportional coefficient, and
the computation unit determines wavefront aberration obtained by accumulating multiplications of the one or more wavefront aberrations W ($\rho$, $\theta$) by each of predetermined proportional coefficients as an aberration state of at least one of the detection optical system and the illumination optical system that should be set by the aberration setting unit.

15. The microscope according to claim 14,
wherein the one or more wavefront aberrations W ($\rho$, $\theta$) is a wavefront aberration function $Z_n{}^m$ ($\rho$, $\theta$) represented by Expression (1) and Expression (2) using an integer n equal to or more than 0, an integer m of which an absolute value is equal to or less than n and in which (n-m) is an even number, and an integer k.
[Formula 1]

$$Z_n^m(\rho, \theta) = \begin{cases} R_n^m(\rho) \cos(m\theta) & m \geq 0 \\ R_n^m(\rho) \sin(|m|\theta) & m < 0 \end{cases} \quad \cdots (1)$$

$$R_n^m(\rho) = \sum_{k=0}^{\frac{n-|m|}{2}} \frac{(-1)^k (n-k)!}{k! \left(\frac{n+m}{2} - k\right)! \left(\frac{n-m}{2} - k\right)!} \rho^{n-2k} \quad \cdots (2)$$

16. The microscope according to claim 15,
wherein the calculation unit calculates an amount corresponding to a peak intensity of light amount distribution of the detection image as the light amount distribution information.

**17.** The microscope according to claim 14,
wherein the one or more wavefront aberrations W ($\rho$, $\theta$) is a wavefront aberration function $L_n^m$ ($\rho$, $\theta$) represented by Expression (3), Expression (4), and Expression (5) using an integer n equal to or more than 0, an integer m of which an absolute value is equal to or less than n and in which (n-m) is an even number, and an integer k.
[Formula 2]

$$L_n^m(\rho, \theta) = \begin{cases} B_n^m(\rho)\cos(m\theta) & m \geq 0 \\ B_n^m(\rho)\sin(|m|\theta) & m < 0 \end{cases} \quad \cdots (3)$$

$$B_n^m(\rho) = \begin{cases} \dfrac{1}{\sqrt{4n}}\left(R_n^0(\rho) - R_{n-2}^0(\rho)\right) & m = 0 \\ \dfrac{1}{\sqrt{2n}}\left(R_n^m(\rho) - R_{n-2}^m(\rho)\right) & m \neq n \neq 0 \\ \dfrac{1}{\sqrt{n}}R_n^n(\rho) & m = n \neq 0 \end{cases} \quad \cdots (4)$$

$$R_n^m(\rho) = \sum_{k=0}^{\frac{n-|m|}{2}} \frac{(-1)^k(n-k)!}{k!\left(\frac{n+m}{2}-k\right)!\left(\frac{n-m}{2}-k\right)!}\rho^{n-2k} \quad \cdots (5)$$

**18.** The microscope according to claim 17,
wherein the calculation unit calculates, as the light amount distribution information, a second-order moment of light amount distribution of the detection image or a normalized second-order moment obtained by dividing the secondary moment of the light amount distribution of the detection image by an integration value of the light amount distribution of the detection image.

**19.** A program that is executed by a control part,

causing a data acquisition unit through the control part to acquire a plurality of detection images in states in which aberration states of a detection optical system or an illumination optical system are different from each other, each of the detection images being obtained by detecting an illumination region on a sample on which illumination light by the illumination optical system is focused using a plurality of detection units arranged on an image plane of the detection optical system,
causing a calculation unit through the control part to calculate light amount distribution information of each of the plurality of detection images, and
causing a computation unit through the control part to determine an aberration state which should be set in the illumination optical system or the detection optical system based on a plurality of the light amount distribution information.

FIG. 1

FIG. 2A

FIG. 2B

FIG. 3

```
                    ┌─────────────┐
                    │    START    │
                    └──────┬──────┘
                           ▼
        ┌──────────────────────────────────────┐
        │ INITIAL SETTING OF MAGNIFICATION OF   │  S101
        │ VARIABLE MAGNIFICATION OPTICAL SYSTEM │
        └──────────────────┬───────────────────┘
                           ▼
        ┌──────────────────────────────────────┐
        │       INPUT DESIGNATED POSITION       │  S102
        └──────────────────┬───────────────────┘
                           ▼
        ┌──────────────────────────────────────┐
        │  LOOP OF ABERRATION SETTING STATE     │  S103
        │       ( k = 1,2, ···, K )             │
        └──────────────────┬───────────────────┘
                           ▼
        ┌──────────────────────────────────────┐
        │      SET k-th ABERRATION STATE Ck     │  S104
        └──────────────────┬───────────────────┘
                           ▼
        ┌──────────────────────────────────────┐
        │        ACQUIRE DETECTION IMAGE        │  S105
        └──────────────────┬───────────────────┘
                           ▼
        ┌──────────────────────────────────────┐
        │    CALCULATE SIZE OF DETECTION IMAGE  │  S106
        └──────────────────┬───────────────────┘
                           ▼
                   IS IT NECESSARY                   S107
        TO CHANGE MAGNIFICATION OF VARIABLE MAGNIFICATION
                   OPTICAL SYSTEM?                      No
                        │ Yes
                        ▼
        ┌──────────────────────────────────────┐
        │      CALCULATE MAGNIFICATION THAT     │  S108
        │          SHOULD BE SET AGAIN          │
        └──────────────────┬───────────────────┘
                           ▼
        ┌──────────────────────────────────────┐
        │      SET MAGNIFICATION OF VARIABLE    │  S109
        │   MAGNIFICATION OPTICAL SYSTEM AGAIN  │
        └──────────────────────────────────────┘
                           ▼
        ┌──────────────────────────────────────┐
        │  CALCULATE LIGHT AMOUNT DISTRIBUTION  │  S110
        │     INFORMATION OF DETECTION IMAGE    │
        └──────────────────┬───────────────────┘
                           ▼
        ┌──────────────────────────────────────┐
        │  END OF LOOP OF ABERRATION SETTING STATE │  S111
        └──────────────────┬───────────────────┘
                           ▼
        ┌──────────────────────────────────────┐
        │   DETERMINE ABERRATION STATE TO BE SET │  S112
        └──────────────────┬───────────────────┘
                           ▼
        ┌──────────────────────────────────────┐
        │     SET DETERMINED ABERRATION         │  S113
        │     STATE IN OPTICAL SYSTEM           │
        └──────────────────┬───────────────────┘
                           ▼
                    ┌─────────────┐
                    │     END     │
                    └─────────────┘
```

FIG. 4A

FIG. 4B

FIG. 5

FIG. 6

FIG. 7

```
                    ┌─────────────────┐
                    │      START      │
                    └────────┬────────┘
                             ▼
        ┌──────────────────────────────────────┐
        │ INITIAL SETTING OF MAGNIFICATION OF   │  S101
        │ VARIABLE MAGNIFICATION OPTICAL SYSTEM │
        └──────────────────┬───────────────────┘
                           ▼
        ┌──────────────────────────────────────┐
        │       INPUT DESIGNATED POSITION       │  S102
        └──────────────────┬───────────────────┘
                           ▼
        ┌──────────────────────────────────────┐
        │      LOOP OF INDEX NUMBER n0, m0      │  S200
        └──────────────────┬───────────────────┘
                           ▼
        ┌──────────────────────────────────────┐
        │    LOOP OF ABERRATION SETTING STATE   │  S103
        │          ( k = 1,2, ···, K )          │
        └──────────────────┬───────────────────┘
                           ▼
        ┌──────────────────────────────────────┐
        │      SET k-th ABERRATION STATE Ck     │  S104
        └──────────────────┬───────────────────┘
                           ▼
        ┌──────────────────────────────────────┐
        │        ACQUIRE DETECTION IMAGE        │  S105
        └──────────────────┬───────────────────┘
                           ▼
        ┌──────────────────────────────────────┐
        │     CALCULATE SIZE OF DETECTION IMAGE │  S106
        └──────────────────┬───────────────────┘
                           ▼
                  IS IT NECESSARY                   S107
        TO CHANGE MAGNIFICATION OF VARIABLE MAGNIFICATION   No
                  OPTICAL SYSTEM?
                           │ Yes
                           ▼
        ┌──────────────────────────────────────┐
        │      CALCULATE MAGNIFICATION THAT     │  S108
        │          SHOULD BE SET AGAIN          │
        └──────────────────┬───────────────────┘
                           ▼
        ┌──────────────────────────────────────┐
        │      SET MAGNIFICATION OF VARIABLE    │  S109
        │   MAGNIFICATION OPTICAL SYSTEM AGAIN  │
        └──────────────────┬───────────────────┘
                           ▼
        ┌──────────────────────────────────────┐
        │    CALCULATE LIGHT AMOUNT DISTRIBUTION│  S110
        │       INFORMATION OF DETECTION IMAGE  │
        └──────────────────┬───────────────────┘
                           ▼
        ┌──────────────────────────────────────┐
        │  END OF LOOP OF ABERRATION SETTING STATE │  S111
        └──────────────────┬───────────────────┘
                           ▼
        ┌──────────────────────────────────────┐
        │     DETERMINE COEFFICIENT αn0m0       │  S201
        └──────────────────┬───────────────────┘
                           ▼
        ┌──────────────────────────────────────┐
        │   END OF LOOP OF INDEX NUMBER n0, m0  │  S202
        └──────────────────┬───────────────────┘
                           ▼
        ┌──────────────────────────────────────┐
        │  DETERMINE ABERRATION STATE W (ρ, θ)  │  S203
        └──────────────────┬───────────────────┘
                           ▼
        ┌──────────────────────────────────────┐
        │       SET DETERMINED ABERRATION       │  S113
        │        STATE IN OPTICAL SYSTEM        │
        └──────────────────┬───────────────────┘
                           ▼
                    ┌─────────────────┐
                    │       END       │
                    └─────────────────┘
```

FIG. 8

FIG. 9

## INTERNATIONAL SEARCH REPORT

| International application No. |
| --- |
| **PCT/JP2021/041029** |

**A.    CLASSIFICATION OF SUBJECT MATTER**

*G02B 21/36*(2006.01)i
FI:   G02B21/36

According to International Patent Classification (IPC) or to both national classification and IPC

**B.    FIELDS SEARCHED**

Minimum documentation searched (classification system followed by classification symbols)

G02B21/36

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2016-532883 A (CARL ZEISS MICROSCOPY GMBH) 20 October 2016 (2016-10-20) paragraphs [0029], [0064]-[0089], fig. 1-5 | 1-3, 6, 8, 13, 19 |
| Y | paragraphs [0029], [0064]-[0089], fig. 1-5 | 2, 4, 5, 12, 14 |
| A | entire text, all drawings | 7, 9-11, 15-18 |
| Y | JP 2019-070820 A (PRESIDENT & FELLOWS OF HARVARD COLL.) 09 May 2019 (2019-05-09) paragraphs [0046]-[0083], fig. 1c | 4 |
| Y | JP 2015-531072 A (ISIS INNOVATION LTD.   ) 29 October 2015 (2015-10-29) paragraphs [0020]-[0073] | 5 |
| Y | JP 2018-205069 A (HITACHI, LTD.) 27 December 2018 (2018-12-27) paragraph [0031] | 12 |
| Y | WO 2009/153919 A1 (NIKON CORP.) 23 December 2009 (2009-12-23) paragraphs [0018]-[0049] | 12 |

☑ Further documents are listed in the continuation of Box C.      ☑ See patent family annex.

| * Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **20 December 2021** | **25 January 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/041029**

### C. DOCUMENTS CONSIDERED TO BE RELEVANT

| Category* | Citation of document, with indication, where appropriate, of the relevant passages | Relevant to claim No. |
|---|---|---|
| Y | JP 2011-180290 A (HAMAMATSU PHOTONICS KK) 15 September 2011 (2011-09-15) paragraphs [0082]-[0090] | 14 |
| X | JP 2018-173507 A (NIKON CORP.) 08 November 2018 (2018-11-08) paragraphs [0011]-[0076], fig. 1-9 | 1, 3, 6, 8, 12, 13, 19 |
| Y | paragraphs [0011]-[0076], fig. 1-9 | 2, 4, 5, 14 |
| A | entire text, all drawings | 7, 9-11, 15-18 |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/JP2021/041029**</td></tr>
</table>

| Patent document<br>cited in search report | Publication date<br>(day/month/year) | Patent family member(s) | Publication date<br>(day/month/year) |
|---|---|---|---|
| JP 2016-532883 A | 20 October 2016 | US 2015/0077844 A1<br>paragraphs [0029], [0077]-[0103], fig. 1-5<br>EP 3047325 A1<br>DE 102013218795 A1 | |
| JP 2019-070820 A | 09 May 2019 | US 2011/0002530 A1<br>paragraphs [0051]-[0084], fig. 1c<br>EP 2232244 A1<br>CN 101918816 A | |
| JP 2015-531072 A | 29 October 2015 | US 2015/0226950 A1<br>paragraphs [0039]-[0091]<br>EP 2888575 A1 | |
| JP 2018-205069 A | 27 December 2018 | (Family: none) | |
| WO 2009/153919 A1 | 23 December 2009 | US 2011/0141260 A1<br>[0033]-[0063] | |
| JP 2011-180290 A | 15 September 2011 | (Family: none) | |
| JP 2018-173507 A | 08 November 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020190386 A
- US 9632296 B
- JP 4933706 B

**Non-patent literature cited in the description**

- **C. J. SHEPPARD ; S. B. MEHTA ; R. HEINTZ-MANN.** Superresolution by image scanning microscopic using pixel reassignment. *Optics Letter (USA),* 2013, vol. 38 (15), 2889